# EUROPEAN PATENT SPECIFICATION

(11) **EP 4 047 048 B1**
(45) Date of publication and mention of the grant of the patent: **13.05.2026**
(21) Application number: 20877039.6
(22) Date of filing: 16.10.2020
(51) Int. Cl.: C08L 9/00, B60C 1/00, C08G 18/00, C08G 18/10, C08K 3/04, C08L 101/02, C08G 18/12, C08G 18/28, C08G 18/32, C08G 18/36, C08G 18/38, C08G 18/44, C08G 18/69, C08G 18/76

(54) **PARTICLE DISPERSION, RUBBER COMPOSITION, AND PNEUMATIC TIRE**
PARTIKELDISPERSION, KAUTSCHUKZUSAMMENSETZUNG UND LUFTREIFEN
DISPERSION DE PARTICULES, COMPOSITION DE CAOUTCHOUC ET PNEUMATIQUE

(30) Priority: 16.10.2019 JP 2019189476
(43) Date of publication of application: 24.08.2022
(73) Proprietor: The Yokohama Rubber Co., Ltd., Hiratsuka-shi, Kanagawa 254-8601 (JP)
(72) Inventor: KAGEYAMA Hirokazu, Hiratsuka-shi, Kanagawa 254-8601 (JP); KIMURA Kazushi, Hiratsuka-shi, Kanagawa 254-8601 (JP)
(74) Representative: Grünecker Patent- und Rechtsanwälte PartG mbB
(86) International application number: PCT/JP2020/039167
(87) International publication number: WO 2021/075571

(56) References cited:
- EP-A1- 3 272 803
- WO-A1-2017/034033
- JP-A- 2004 511 580
- JP-A- 2012 211 316
- JP-A- 2015 221 855
- JP-A- 2020 132 731
- JP-A- H05 178 946
- JP-A- H10 330 720
- US-A1- 2018 207 984

## Description

### Technical Field

The present invention relates to a particle dispersion, a rubber composition, and a pneumatic tire.

### Background Art

In the related art, a rubber composition for a tire, the rubber composition containing microparticles to enhance performance on ice and wear resistance, has been proposed (e.g., Patent Document 1).

Patent Document 1 describes a rubber composition for a tire, the rubber composition containing 100 parts by mass of a diene rubber (A),
from 30 to 100 parts by mass of carbon black and/or white filler (B),
from 0.3 to 30 parts by mass of a crosslinkable oligomer or polymer (C) that is miscible with the diene rubber (A) and that is different from the diene rubber (A), and
from 0.3 to 12 parts by mass of a three-dimensionally crosslinked microparticles (D) having an average particle diameter from 1 to 200 µm,
the crosslinkable oligomer or polymer (C) being a liquid diene polymer (claim 1), and
the microparticles (D) being microparticles obtained by three-dimensionally crosslinking an oligomer or polymer (d1) that is not miscible with the crosslinkable oligomer or polymer (C) in advance in the crosslinkable oligomer or polymer (C) (claim 2).

Patent Document 2 discloses a tire rubber composition and a pneumatic tire using the same. The tire rubber composition includes 100 parts by mass of a diene rubber (A) and from 1 to 50 parts by mass of elastic microparticles (B), wherein the elastic microparticles (B) have a form of microparticles obtained by crosslinking a crosslinkable oligomer or polymer (b1) in water or an organic solvent, or in the diene rubber (A), and have an average particle size of from 0.001 to 100 µm.

Patent Document 3 discloses a rubber composition and a pneumatic tire using the same. The rubber composition contains a diene rubber (A) and a microparticle (B), a vinyl group content of the diene rubber (A) being from 5 to 35 mass %, the microparticle (B) being a mercapto group-containing organic microparticle in which a crosslinkable oligomer or polymer (b1) is crosslinked, an average particle size of the microparticle (B) being from 1 to 200 µm, and a content of the microparticle (B) being from 1 to 55 parts by mass per 100 parts by mass of the diene rubber (A).

### Citation List

### Patent Literature

Patent Document 1: JP 5949026 B
Patent Document 2: EP 3 272 803 A1
Patent Document 3: US 2018/207984 A1

### Summary of Invention

### Technical Problem

In such circumstances, when the inventors of the present invention prepared particles using Patent Document 1 as a reference and evaluated a rubber composition containing the particles, it was found that, when, for example, a tire is formed from the rubber composition, further enhancement of fuel economy performance and tensile properties is desirable. Furthermore, it was also found that further enhancement of processability of the rubber composition is desirable. In addition, it was also found that enhancement of performance on ice is preferred.

In light of the circumstances described above, an object of the present invention is to provide a particle dispersion exhibiting excellent processability, fuel economy performance, tensile properties, and performance on ice when used in a rubber composition, a method of producing the same, a rubber composition containing the particle dispersion, and a pneumatic tire produced by using the rubber composition.

### Solution to Problem

As a result of diligent research to solve the problems described above, the inventors of the present invention found that, in a particle dispersion, by dispersing particles surface-modified with a hydrocarbon group having from 3 to 30 carbons and formed from a polymer that is not a diene polymer, in a diene polymer having a number average molecular weight from 1000 to 100000, and by bonding the hydrocarbon group to the polymer that is not a diene polymer through a urea bond or a urethane bond, effects such as excellent processability can be achieved when the particle dispersion is used for a rubber composition.

Furthermore, the inventors of the present invention found a method of producing a particle dispersion,
the method producing the particle dispersion described above and including:
micelle forming of obtaining a micelle dispersion containing a micelle of a polymer, the polymer not being a diene polymer and containing an isocyanate group, by dispersing the polymer in a diene polymer having a number average molecular weight from 1000 to 100000 in the presence of a surfactant; and
surface-modifying of modifying a surface of the micelle with a hydrocarbon group having from 3 to 30 carbons by adding a compound containing the hydrocarbon group, and a hydroxy group, an amino group, or an imino group in the micelle dispersion, and allowing the isocyanate group contained in the micelle and the compound to react.

Furthermore, the present inventors found that the desired effects can be achieved by
a particle dispersion containing particles formed from a polymer that are dispersed in a diene polymer A having a number average molecular weight from 1000 to 100000,
the polymer forming the particles being a polymer C that is not a diene polymer,
the particles being surface-modified with a hydrocarbon group having from 3 to 30 carbons and/or a diene polymer D, and
the hydrocarbon group having from 3 to 30 carbons or the diene polymer D being each independently bonded to the polymer C forming the particles through a urea bond, a urethane bond, or an amide bond, and
thus completed the present invention.

An embodiment of the present invention is based on the findings described above, and specifically solves the problems described above by the following configurations.
[1] A particle dispersion containing particles formed from a polymer that are dispersed in a diene polymer A having a number average molecular weight from 1000 to 100000,
   the polymer forming the particles being a polymer C that is not a diene polymer, and
   the particles being surface-modified with a hydrocarbon group having from 3 to 30 carbons and/or a diene polymer D, and
   the hydrocarbon group having from 3 to 30 carbons or the diene polymer D being each independently bonded to the polymer C forming the particles through a urea bond, a urethane bond, or an amide bond;
   wherein the number average molecular weight is a standard polystyrene conversion value obtained by gel permeation chromatography measurement using tetrahydrofuran as solvent and a RI detector.
[2] The particle dispersion according to [1], where
   the diene polymer A having a number average molecular weight from 1000 to 100000 contains at least one type of unmodified diene polymer selected from the group consisting of unmodified isoprene homopolymers, butadiene homopolymers, acrylonitrile-butadiene polymers, styrene-butadiene polymers, styrene-isoprene polymers, and styrene-isoprene-butadiene polymers, and
   a content of the unmodified diene polymer is 50 mass% or greater based on the total amount of the diene polymer A having a number average molecular weight from 1000 to 100000;
   wherein the number average molecular weight is a standard polystyrene conversion value obtained by gel permeation chromatography measurement using tetrahydrofuran as solvent and a RI detector.
[3] The particle dispersion according to [1] or [2], where an average particle diameter of the particles that are surface-modified is from 0.01 to 200 µm; wherein the average particle diameter is measured by a laser diffraction particle size distribution analyzer.
[4] The particle dispersion according to any one of [1] to [3], where a content of the particles that are surface-modified is from 1 to 300 parts by mass based on 100 parts by mass of the diene polymer A having a number average molecular weight from 1000 to 100000; wherein the number average molecular weight is a standard polystyrene conversion value obtained by gel permeation chromatography measurement using tetrahydrofuran as solvent and a RI detector.
[5] The particle dispersion according to any one of [1] to [4], where the hydrocarbon group is formed only from a carbon atom and a hydrogen atom.
[6] The particle dispersion according to any one of [1] to [5], where the hydrocarbon group is a monovalent hydrocarbon group.
[7] The particle dispersion according to any one of [1] to [6], where the hydrocarbon group is an aliphatic hydrocarbon group that may have an unsaturated bond.
[8] The particle dispersion according to any one of [1] to [7], where the hydrocarbon group is an alkyl group or an alkenyl group.
[9] The particle dispersion according to any one of [1] to [8], where the hydrocarbon group is bonded to the polymer C forming the particles through the urea bond or the urethane bond.
[10] The particle dispersion according to any one of [1] to [9], where the diene polymer D is bonded to the polymer C forming the particles through the amide bond.
[11] A method of producing a particle dispersion,
   the method producing the particle dispersion according to any one of [1] to [10],
   the method comprising:
      micelle forming of obtaining a micelle dispersion containing a micelle of a polymer E, the polymer E not being a diene polymer and containing an isocyanate group, an amino group, or an imino group, by dispersing the polymer E in a diene polymer A having a number average molecular weight from 1000 to 100000 in the presence of a surfactant, and
      surface-modifying by, in a case where the polymer E in the micelle dispersion contains an isocyanate group, adding a compound F containing a hydrocarbon group having from 3 to 30 carbons, and a hydroxy group, an amino group, or an imino group, and/or a diene polymer G containing a hydroxy group, an amino group, or an imino group in the micelle dispersion, reacting the isocyanate group contained in the micelle and the compound F and/or the diene polymer G, and modifying a surface of the micelle with the hydrocarbon group and/or the diene polymer D through a urethane bond or a urea bond, or
      in a case where the polymer E in the micelle dispersion contains an amino group or an imino group, adding a compound H containing a hydrocarbon group having from 3 to 30 carbons and a carboxy group or an acid anhydride group, and/or a diene polymer I containing a carboxy group or an acid anhydride group in the micelle dispersion, reacting the amino group or the imino group contained in the micelle and the compound H and/or the diene polymer I, and modifying a surface of the micelle with the hydrocarbon group and/or the diene polymer D through an amide bond;
      wherein the number average molecular weight is a standard polystyrene conversion value obtained by gel permeation chromatography measurement using tetrahydrofuran as solvent and a RI detector.
[12] A rubber composition containing a diene rubber X and the particle dispersion according to any one of [1] to [10].
[13] The rubber composition according to [12], where a content of the particle dispersion is from 1 to 150 parts by mass based on 100 parts by mass of the diene rubber X.
[14] The rubber composition according to [12] or [13], further containing at least one type of filler selected from the group consisting of carbon black and white fillers,
   a content of the filler being from 1 to 200 parts by mass based on 100 parts by mass of the diene rubber X.
[15] A pneumatic tire produced by using the rubber composition according to any one of [12] to [14].

### Advantageous Effects of Invention

As described below, according to embodiments of the present invention, a particle dispersion exhibiting excellent processability, fuel economy performance, tensile properties, and performance on ice when used in a rubber composition, a method of producing the same, a rubber composition containing the particle dispersion, and a pneumatic tire produced by using the rubber composition can be provided.

### Brief Description of Drawings

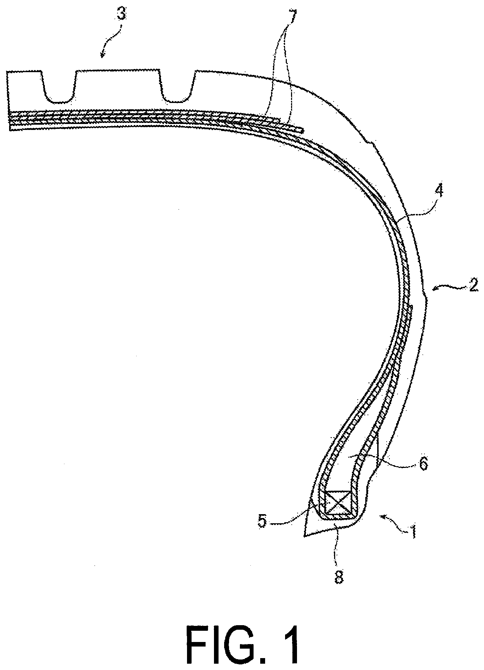

FIG. 1 is a partial cross-sectional schematic view of a pneumatic tire according to an embodiment of the present invention.

### Description of Embodiments

Hereinafter, a particle dispersion, a method of producing the same, a rubber composition containing the particle dispersion, and a pneumatic tire produced by the rubber composition of embodiments of the present invention will be described.

In the present specification, a numerical range indicated using "(from) ... to ..." includes the former number as the lower limit value and the latter number as the upper limit value.

For each component, one type may be used alone, or a combination of two or more types may be used. Here, when two or more types for each of the components are used in combination, the content of the corresponding component refers to the total content unless otherwise specified.

In the present specification, the fact that at least one of processability, fuel economy performance, tensile properties, or performance on ice is superior is also referred to as "exhibiting superior effect of the present invention".

### Particle Dispersion

The particle dispersion of an embodiment of the present invention is a particle dispersion containing particles formed from a polymer that are dispersed in a diene polymer A having a number average molecular weight from 1000 to 100000,
the polymer forming the particles being a polymer C that is not a diene polymer, and
the particles being surface-modified with a hydrocarbon group having from 3 to 30 carbons and/or a diene polymer D, and
the hydrocarbon group having from 3 to 30 carbons or the diene polymer D being each independently bonded to the polymer C forming the particles through a urea bond, a urethane bond, or an amide bond.

It is thought that the particle dispersion according to an embodiment of the present invention can achieve the effects described above because of having such a configuration. Although the reason is not clear, it is presumed that, because the surface of the particle is modified with the hydrocarbon group having from 3 to 30 carbons and/or the diene polymer D, the particles are readily dispersed in the diene polymer A contained in the particle dispersion of an embodiment of the present invention and having a number average molecular weight from 1000 to 100000 and/or the diene rubber X contained in the rubber composition of an embodiment of the present invention, and thus the processability, fuel economy performance, tensile properties, and performance on ice are enhanced when the particle dispersion according to an embodiment of the present invention is used for a rubber composition.

### Diene Polymer A Having Number Average Molecular Weight from 1000 to 100000

The particle dispersion according to an embodiment of the present invention contains a diene polymer A having a number average molecular weight from 1000 to 100000.

Note that, in the present specification, the diene polymer having a number average molecular weight from 1000 to 100000 may be also referred to as "diene polymer A".

An example of a preferable aspect is one in which the diene polymer A having a number average molecular weight from 1000 to 100000 contained in the particle dispersion according to an embodiment of the present invention is liquid in a condition at 23°C.

The viscosity of the diene polymer A can be, for example, 1000 Pa·s or less, in a condition at 38°C. Note that, in a case where a diene polymer used as the diene polymer A is a commercially available product, the officially listed value in a catalog can be referred to as the viscosity of the diene polymer A.

In the particle dispersion according to an embodiment of the present invention, in the diene polymer A, the particles described below can be dispersed in the diene polymer A. In the particle dispersion according to an embodiment of the present invention, the diene polymer A can function as a dispersion medium.

### Type of Diene Polymer A

The diene polymer A contained in the particle dispersion according to an embodiment of the present invention is not particularly limited as long as the number average molecular weight thereof is from 1000 to 100000.

The diene monomer that can constitute the diene polymer A is only required to be a monomer containing a conjugated diene monomer.

Specific examples of the diene polymer A include polyisoprene, polybutadiene, acrylonitrile butadiene copolymers, styrene butadiene copolymers, styrene isoprene copolymers, and styrene isoprene butadiene rubber copolymers. Among these, from the perspective of exhibiting superior effect of the present invention, polybutadiene, polyisoprene, or a styrene butadiene copolymer is preferred, polyisoprene or a styrene butadiene copolymer is more preferred, and a styrene butadiene copolymer is even more preferred.

### Number Average Molecular Weight of Diene Polymer A

In the particle dispersion according to an embodiment of the present invention, the number average molecular weight of the diene polymer A is from 1000 to 100000.

From the perspective of exhibiting superior effect of the present invention, the number average molecular weight (Mn) of the diene polymer A is preferably from 5000 to 50000.

Note that the Mn described above are each a standard polystyrene conversion value obtained by gel permeation chromatography (GPC) measurement under the following conditions.
- Solvent: Tetrahydrofuran
- Detector: RI detector

### Presence of Modification

As long as the diene polymer A is a diene polymer having a number average molecular weight from 1000 to 100000, the diene polymer A may be unmodified or modified. When the diene polymer A is modified, the group with the modification (modification group) is not particularly limited.

From the perspective of exhibiting superior effect of the present invention, the diene polymer A is preferably unmodified.

As (the type of) the diene polymer A, from the perspective of exhibiting superior effect of the present invention, at least one type of unmodified diene polymer selected from the group consisting of unmodified isoprene homopolymers, butadiene homopolymers, acrylonitrile-butadiene copolymers, styrene-butadiene copolymers, styrene-isoprene copolymers, and styrene-isoprene-butadiene copolymers is preferably contained, an unmodified isoprene homopolymer, butadiene homopolymer, or styrene butadiene copolymer is more preferred, an unmodified isoprene homopolymer or styrene butadiene copolymer is even more preferred, and an unmodified styrene butadiene copolymer is yet even more preferred.

In a case where the diene polymer A contains the unmodified diene polymer, the content of the unmodified diene polymer is preferably 50 mass% or greater, more preferably 80 mass% or greater, and even more preferably 100 mass%, based on the total amount of the diene polymer A from the perspective of exhibiting superior effect of the present invention.

### Particles

In the particle dispersion according to an embodiment of the present invention,
particles formed from a polymer are dispersed in the diene polymer A described above,
the polymer forming the particles is a polymer C that is not a diene polymer, and
the particles are surface-modified with a hydrocarbon group having from 3 to 30 carbons and/or a diene polymer D, and
the hydrocarbon group having from 3 to 30 carbons or the diene polymer D is each independently bonded to the polymer C forming the particles through a urea bond, a urethane bond, or an amide bond.

In other words, in the particle dispersion according to an embodiment of the present invention, the particles that are surface-modified as described above (hereinafter, they are also referred to as "surface-modified particles") are dispersed in the diene polymer A described above. In the surface-modified particles described above, the hydrocarbon group having from 3 to 30 carbons or the diene polymer D is each independently bonded to the polymer C forming the particles through a urea bond, a urethane bond, or an amide bond.

In the particle dispersion according to an embodiment of the present invention, the surface-modified particles are surface-modified with a hydrocarbon group having from 3 to 30 carbons and/or a diene polymer D as described above.

Furthermore, particles contained in the surface-modified particles are particles formed from a polymer C that is not a diene polymer.

In the surface-modified particles, the hydrocarbon group and/or the diene polymer D is each independently bonded to the "polymer C that is not a diene polymer" forming the particles contained in the surface-modified particles through a urea bond, a urethane bond, or an amide bond.

Note that, in "polymer C that is not a diene polymer" forming the particles contained in the surface-modified particles described above, "diene polymer" may be also referred to as "diene polymer B".

The "polymer C that is not the diene polymer B" described above refers to polymers in general but except for diene polymers in general having a repeating unit composed of a diene monomer (diene polymer B). The diene monomer is not particularly limited as long as the diene monomer is a conjugated diene monomer.

A particle typically refers to being granular.

In the surface-modified particles described above, a particle contained in the surface-modified particle may be also referred to as "granular part" or simply referred to as "particle".

In the particle dispersion according to an embodiment of the present invention, the surface-modified particle functions as a dispersoid.

### Polymer C That Is Not Diene Polymer

In the surface-modified particles described above, the particle (or the granular part) is formed from a polymer, and the polymer forming the particle is formed from the polymer C that is not the diene polymer B.

The particle is only required to be formed from the polymer C that is not the diene polymer B.

The polymer C that is not the diene polymer B (backbone of the polymer that is not the diene polymer B) is not particularly limited. Examples thereof include thermoplastic resins other than diene polymers and thermosetting resins other than diene polymers. Specific examples thereof include polyurethane-based, polyether-based, polyester-based, polyolefin-based, polycarbonate-based, aliphatic-based, saturated hydrocarbon-based, acrylic-based, or plant-derived, or siloxane-based oligomers or polymers. Among these, from the perspective of exhibiting superior effect of the present invention, polyurethane polymers and polycarbonate polymers are preferred, and polyurethane polymers are more preferred.

The polyurethane polymer that can form the particle (granular part) is only required to be a polymer formed from a repeating unit containing a urethane bond or a urea bond.

From the perspective of exhibiting superior effect of the present invention, the polyurethane polymer is preferably a polycarbonate-based polyurethane and/or a castor oil-based polyurethane are preferred, and polyurethane derived from a polycarbonate-based polyol and/or polyurethane derived from a castor oil polyol are more preferred.

Furthermore, the polyurethane polymer may be a urethane polymer (or urethane prepolymer; the same applies hereinafter). Examples of the urethane polymer include polycarbonate-based urethane polymers (specific examples include urethane polymers obtained by using polycarbonate-based polyols as raw materials) and castor oil-based urethane polymers (specific examples include urethane polymers obtained by using castor oil polyols as raw materials).

The raw material that can form the polyurethane polymer (or urethane polymer) will be described below.

### Hydrocarbon Group Having from 3 to 30 Carbons and/or Diene Polymer D

In an embodiment of the present invention, the particles are surface-modified with a hydrocarbon group having from 3 to 30 carbons and/or a diene polymer D.

From the perspective of exhibiting superior effect of the present invention (especially elongation at break and/or performance on ice), the particles are preferably surface-modified with the diene polymer D.

The particle can have one or a plurality of the hydrocarbon groups and/or the diene polymers D described above in its surface (in a case where the hydrocarbon group and the diene polymer D are present in the surface of the particle, the total of the hydrocarbon group and the diene polymer D is a plural number). The particle preferably has a plurality of the hydrocarbon groups and/or the diene polymers D in its surface.

### Hydrocarbon Group Having from 3 to 30 Carbons

The hydrocarbon group having from 3 to 30 carbons that can surface-modify the particle is bonded to the polymer C forming the particle through a urea bond, a urethane bond, or an amide bond, as described below.

### Number of Carbons

In an embodiment of the present invention, the number of carbons of the hydrocarbon group is from 3 to 30.

From the perspective of exhibiting superior effect of the present invention, the number of carbons is preferably from 5 to 20, and more preferably from 8 to 18.

### Hydrocarbon Group

The hydrocarbon group is not particularly limited as long as the number of carbons is from 3 to 30. Examples of the hydrocarbon group include aliphatic hydrocarbon groups (including the concept of straight-chain, branched, or cyclic), aromatic hydrocarbon groups, and combinations thereof.

From the perspective of exhibiting superior effect of the present invention, the hydrocarbon group is preferably formed only from carbon atom(s) and hydrogen atom(s).

From the perspective of exhibiting superior effect of the present invention, the hydrocarbon group is preferably a monovalent hydrocarbon group.

The hydrocarbon group may be any one of a saturated hydrocarbon group or an unsaturated hydrocarbon group. From the perspective of exhibiting superior effect of the present invention, the hydrocarbon group is preferably an aliphatic hydrocarbon group that may have an unsaturated bond.

The unsaturated bond is not particularly limited, and examples thereof include a double bond.

From the perspective of exhibiting superior effect of the present invention, the hydrocarbon group is preferably an alkyl group or an alkenyl group.

Examples of the hydrocarbon group include saturated aliphatic hydrocarbon groups, such as a propyl group, a butyl group, a pentyl group, a hexyl group, an octyl group, a decyl group, a dodecyl group, a tetradecyl group, a hexadecyl group, a heptadecyl group, an octadecyl group, and an eicosyl group; and
unsaturated aliphatic hydrocarbon groups, such as an allyl group, a butenyl group, a pentenyl group, a heptenyl group, an octenyl group, and an oleyl group.

### Diene Polymer D

The diene polymer D that can surface-modify the particles is a polymer formed from a monomer containing a conjugated diene monomer as a diene monomer, and is bonded to the polymer C forming the particle through a urea bond, a urethane bond, or an amide bond, as described below. Thus, the diene polymer D has a bonding point with the urea bond and the like described above.

Note that the diene polymer D does not contain the hydrocarbon group having from 3 to 30 carbons described above.

Specific examples of the diene polymer D include polyisoprene, polybutadiene, acrylonitrile butadiene copolymers, styrene butadiene copolymers, styrene isoprene copolymers, and styrene isoprene butadiene rubber copolymers.

Among these, from the perspective of exhibiting superior effect of the present invention, polybutadiene, polyisoprene, or a styrene butadiene copolymer is preferred, polyisoprene is more preferred.

### Presence of Modification Group

The diene polymer D may further contain a modification group (except urea bond, urethane bond, and amide bond) in addition to a urea bond, a urethane bond, or an amide bond that is bonded to the diene polymer D.

Examples of the modification group include a carboxy group, an acid anhydride group, an amino group, and an imino group. Among these, a carboxy group and an acid anhydride group are preferred.

The modification group may be a modification group derived from a diene polymer G having a hydroxy group, an amino group, or an imino group or derived from a diene polymer I having a carboxy group or an acid anhydride group that are used to introduce the diene polymer D to the particles (micelles) in the production of the particle dispersion according to an embodiment of the present invention. An example of a preferable aspect is one in which the modification group is a carboxy group or an acid anhydride group derived from a diene polymer I having a carboxy group or an acid anhydride group.

### Urea Bond, Urethane Bond, Amide Bond

In the surface-modified particle described above, the particle (granular part) has a surface modified with the hydrocarbon group and/or the diene polymer D. As described above, the particle (granular part) is only required to be formed from the polymer C that is not the diene polymer B.

Furthermore, in the surface-modified particles, the hydrocarbon group and/or the diene polymer D is each independently bonded to the polymer C that is not a diene polymer B, through a urea bond, a urethane bond, or an amide bond.

In other words, in the surface-modified particle, the hydrocarbon group and/or the diene polymer D is each independently bonded to the polymer C that is not a diene polymer B and that forms the particle, through a urea bond, a urethane bond, or an amide bond, and thus the hydrocarbon group and/or the diene polymer D surface-modifies the particle.

Note that, in a case where the particle (granular part) contained in the surface-modified particle described above is formed from a polyurethane polymer, i.e., a case where the particle (granular part) naturally has a urethane bond or a urea bond, the urethane bond or the urea bond naturally contained in the particle (granular part) of the particle is different from the urea bond, urethane bond, or amide bond that is formed at the time of bonding of the hydrocarbon group and/or the diene polymer D and the polymer C that is not the diene polymer B and interposed therebetween.

In a case where the particle contained in the surface-modified particle described above is surface-modified with the hydrocarbon group having from 3 to 30 carbons, the hydrocarbon group is preferably bonded to the polymer C forming the particle through a urea bond or a urethane bond, from the perspective of exhibiting superior effect of the present invention.

In a case where the particle contained in the surface-modified particle described above is surface-modified with the hydrocarbon group having from 3 to 30 carbons, the hydrocarbon group preferably bonds directly to a terminal of the urea bond, the urethane bond, or the amide bond, and the other terminal of the urea bond, the urethane bond, or the amide bond is preferably bonded to the polymer C that is not the diene polymer B, from the perspective of exhibiting superior effect of the present invention.

In a case where the particle contained in the surface-modified particle described above is surface-modified with the diene polymer D, the diene polymer D is preferably bonded to the polymer C forming the particle through the amide bond, from the perspective of exhibiting superior effect of the present invention.

Note that, in an embodiment of the present invention, the urea bond, the urethane bond, or the amide bond may be present on a surface or inside of the particle (granular part).

### Surface Modification

The particles are surface-modified with a hydrocarbon group having from 3 to 30 carbons and/or a diene polymer D.

"Surface-modifying" means that the hydrocarbon group and/or the diene polymer D modifies a surface (or the polymer C that is not the diene polymer B) of the particle (granular part).

The hydrocarbon group having from 3 to 30 carbons or the diene polymer D is each independently bonded to the polymer C forming the particles through a urea bond, a urethane bond, or an amide bond.

### Average Particle Diameter of Surface-Modified Particles

From the perspective of exhibiting superior effect of the present invention, the average particle diameter of the surface-modified particles (or the particles contained in the surface-modified particles) is preferably from 0.01 to 200 µm, and more preferably from 0.1 to 100 µm.

Note that the average particle diameter is measured by a laser diffraction particle size distribution analyzer.

Based on the average particle diameter of the surface-modified particles (or the particles contained in the surface-modified particles), the surface-modified particles (or the particles contained in the surface-modified particles) can be said to be microparticles.

### Content of Surface-Modified Particles

From the perspective of exhibiting superior effect of the present invention, the content of the surface-modified particles is preferably from 1 to 300 parts by mass, and more preferably from 20 to 200 parts by mass, based on 100 parts by mass of the diene polymer A.

The particle dispersion according to an embodiment of the present invention is a mixture in which the particles (surface-modified particles) described above are dispersed in the diene polymer A described above.

The particle dispersion according to an embodiment of the present invention may be, specifically for example, a liquid, cream, or paste in a condition at 23°C.

The viscosity of the particle dispersion according to an embodiment of the present invention is preferably 20000 Pa·s or less, and more preferably from 100 to 10000 Pa·s, in a condition at 23°C. The viscosity can be measured by an E type viscometer using Spindle CPE-52 in a condition at 23°C.

### Method of Producing Particle Dispersion

The method of producing the particle dispersion according to an embodiment of the present invention described above is not particularly limited; however, from the perspective of achieving superior processability, fuel economy performance, tensile properties, or performance on ice when the resulting particle dispersion is used in a rubber composition, a production method including (1) micelle forming and (2) surface-modifying described below is preferred (hereinafter, also referred to as "production method according to an embodiment of the present invention").

### (1) Micelle Forming

The micelle forming is a process of obtaining a micelle dispersion containing a micelle of a polymer E, the polymer E not being a diene polymer and containing an isocyanate group, an amino group, or an imino group, by dispersing the polymer E in a diene polymer A having a number average molecular weight from 1000 to 100000 in the presence of a surfactant.

### (2) Surface-Modifying

The surface-modifying is a process of, in a case where the polymer E in the micelle dispersion contains an isocyanate group, adding a compound F containing a hydrocarbon group having from 3 to 30 carbons, and a hydroxy group, an amino group, or an imino group, and/or a diene polymer G containing a hydroxy group, an amino group, or an imino group in the micelle dispersion, reacting the isocyanate group contained in the micelle and the compound F and/or the diene polymer G, and modifying a surface of the micelle with the hydrocarbon group and/or the diene polymer D through a urethane bond or a urea bond, or
in a case where the polymer E in the micelle dispersion contains an amino group or an imino group, adding a compound H containing a hydrocarbon group having from 3 to 30 carbons and a carboxy group or an acid anhydride group, and/or a diene polymer I containing a carboxy group or an acid anhydride group in the micelle dispersion, reacting the amino group or the imino group contained in the micelle and the compound H and/or the diene polymer I, and modifying a surface of the micelle with the hydrocarbon group and/or the diene polymer D through an amide bond.

Hereinafter, the steps will be described.

### Micelle Forming

The micelle forming is a process of obtaining a micelle dispersion containing a micelle of a polymer E, the polymer E not being a diene polymer and containing an isocyanate group, an amino group, or an imino group, by dispersing the polymer E (the polymer not being a diene polymer and containing an isocyanate group, an amino group, or an imino group) in a diene polymer A having a number average molecular weight from 1000 to 100000 in the presence of a surfactant.

### Polymer E Not Being Diene Polymer and Containing Isocyanate Group, Amino Group, or Imino Group

The polymer E that is used in micelle forming, that is not a diene polymer and that contains an isocyanate group, an amino group, or an imino group (hereinafter, also referred to as "specific polymer") is not particularly limited as long as the polymer E is a polymer that is not a diene polymer and that has an isocyanate group, an amino group, or an imino group. Specific examples and preferred embodiments of the backbone of the polymer E that is not a diene polymer and that is used for the micelle forming are identical to those for "polymer C that is not the diene polymer B" forming the particle (granular part) contained in the surface-modified particle contained in the particle dispersion according to an embodiment of the present invention described above. That is, the polymer E (specific polymer) that is not a diene polymer and that is used for the micelle forming is a polymer having a backbone identical to that of "polymer C that is not the diene polymer B" forming the particle (granular part) contained in the particle dispersion according to an embodiment of the present invention described above, and having an isocyanate group, an amino group, or an imino group.

From the perspective of exhibiting superior effect of the present invention, the specific polymer preferably has a plurality of isocyanate groups, and more preferably has two isocyanate groups, in one molecule. In the case described above, only an isocyanate group may be contained without any amino group and imino group.

Furthermore, an aspect in which the specific polymer contains an amino group and/or an imino group from the perspective of exhibiting superior effect of the present invention is also preferred. In the case described above, the specific polymer may further contain an isocyanate group.

Furthermore, from the perspective of exhibiting superior effect of the present invention, the specific polymer preferably contains an isocyanate group, an amino group, or an imino group at a terminal.

### Specific Urethane Polymer

From the perspective of exhibiting superior effect of the present invention, the specific polymer is preferably a urethane polymer having an isocyanate group (hereinafter, also referred to as "specific urethane polymer").

From the perspective of exhibiting superior effect of the present invention, the specific urethane polymer preferably has two isocyanate groups. Furthermore, from the perspective of exhibiting superior effect of the present invention, the urethane polymer preferably has an isocyanate group at a terminal.

From the perspective of exhibiting superior effect of the present invention, the specific urethane polymer is preferably a substance obtained by polymerizing a polyisocyanate and a compound having two or more active hydrogen-containing groups in one molecule (active hydrogen compound).

The polyisocyanate used in the production of the specific urethane polymer is not particularly limited as long as the polyisocyanate has two or more isocyanate groups in a molecule.

Examples of the polyisocyanate used in the production of the specific urethane polymer include
aromatic polyisocyanates, such as tolylene diisocyanate (TDI), diphenylmethane diisocyanate (MDI; e.g., 4,4'-diphenylmethane diisocyanate and 2,4'-diphenylmethane diisocyanate), 1,4-phenylene diisocyanate, polymethylene polyphenylene polyisocyanate, xylylene diisocyanate (XDI), tetramethylxylylene diisocyanate (TMXDI), tolidine diisocyanate (TODI), 1,5-naphthalene diisocyanate (NDI), and triphenylmethane triisocyanate;
aliphatic polyisocyanates (including alicyclic polyisocyanates), such as hexamethylene diisocyanate (HDI), trimethylhexamethylene diisocyanate (TMHDI), lysine diisocyanate, and norbornane diisocyanate (NBDI), trans-cyclohexane-1,4-diisocyanate, isophorone diisocyanate (IPDI), bis(isocyanate methyl)cyclohexane (H₆XDI), and dicyclohexylmethane diisocyanate (H₁₂MDI);
carbodiimide-modified polyisocyanates thereof; and
isocyanurate-modified polyisocyanates thereof.

From the perspective of exhibiting superior effect of the present invention, the polyisocyanate is preferably an aromatic polyisocyanate and more preferably an MDI.

The compound having two or more active hydrogen-containing groups in one molecule (active hydrogen compound) that is used in the production of the specific urethane polymer is not particularly limited. Examples of the active hydrogen-containing group include a hydroxy (OH) group, an amino group, and an imino group.

Preferred examples of the active hydrogen compound include polyol compounds having two or more hydroxy (OH) groups in one molecule, and the like. Among these, a polyol compound is preferable.

Note that, as the compound having active hydrogen-containing groups used in the production of the specific urethane polymer, a compound having one active hydrogen-containing group in one molecule is preferably not used from the perspective of exhibiting superior effect of the present invention.

The polyol compound is not particularly limited as long as the polyol compound is a compound having two or more hydroxy groups. Examples thereof include polycarbonate polyols; polyether polyols; polyester polyols; polymer polyols having a carbon-carbon bond in the main chain backbone, such as acrylic polyols, polybutadiene diols, and hydrogenated polybutadiene polyols; low molecular weight polyhydric alcohols; castor oil-based polyols; and mixed polyols thereof. Among these, from the perspective of exhibiting superior effect of the present invention, polycarbonate polyols and castor oil-based polyols are preferred.

The polycarbonate polyol is a polymer that is formed from a repeating unit containing a carbonate bond (-O-CO-O-) in the main chain and that has a plurality of hydroxy groups.

Examples of the polycarbonate polyol include those produced via, for example, a reaction such as a methanol removal condensation reaction of polyol and dimethyl carbonate, a phenol removal condensation reaction of polyol and diphenyl carbonate, or an ethylene removal glycol condensation reaction of polyol and ethylene carbonate. Examples of the polyol used in these reactions include various saturated or unsaturated glycols such as 1,6-hexanediol, diethylene glycol, triethylene glycol, propylene glycol, 1,3-butanediol, 1,4-butanediol, neopentyl glycol, pentanediol, 3-methyl-1,5-pentanediol, octanediol, 1,4-butynediol, dipropylene glycol, tripropylene glycol, and polytetramethylene ether glycol; and alicyclic glycols such as 1,4-cyclohexane diglycol and 1,4-cyclohexane dimethanol.

The castor oil-based polyol is a compound derived from castor oil and having a plurality of hydroxy groups. Examples of the castor oil-based polyol include known castor oil-based polyols.

As the specific urethane polymer, a urethane polymer obtained by polymerizing a polycarbonate diol and an aromatic polyisocyanate, and a urethane polymer obtained by polymerizing a castor oil-based polyol and an aromatic polyisocyanate are preferred from the perspective of exhibiting superior effect of the present invention.

The method of producing the specific urethane polymer is not particularly limited. For example, the production can be performed by using polyisocyanate in a manner that from 1.5 to 2.5 mol of isocyanate group is reacted per 1 mol of the active hydrogen-containing group (e.g., hydroxy group) contained in the active hydrogen compound, and mixing these to perform a reaction. Hereinafter, the number of moles of the isocyanate groups contained in the polyisocyanate per 1 mol of the active hydrogen-containing group contained in the active hydrogen compound is also referred to as "NCO/OH".

In an embodiment of the present invention, the specific polymer (the polymer E not being a diene polymer and containing an isocyanate group, an amino group, or an imino group) may be a polymer obtained by extending a chain of the specific urethane polymer described above by applying a chain extender to the specific urethane polymer. Examples of the chain extender include diamine-based chain extenders such as dimethyl thio-toluene diamine; and chain extenders having two imino groups.

The urethane polymer after undergoing chain extension as described above, the urethane polymer may have an isocyanate group derived from the specific urethane polymer and/or an amino group or an imino group derived from the chain extender. The urethane polymer after undergoing chain extension as described above can be used as the specific polymer (polymer E).

The used amount of the specific polymer is preferably from 20 to 200 parts by mass based on 100 parts by mass of the diene polymer A having a number average molecular weight from 1000 to 100000 described below, from the perspective of exhibiting superior effect of the present invention.

### Surfactant

By using a surfactant in the micelle forming, dispersion of the specific polymer in the diene polymer A having a number average molecular weight from 1000 to 100000 described below can be facilitated. That is, formation of micelles of the specific polymer (polymer E) in the diene polymer A having a number average molecular weight from 1000 to 100000 can be facilitated.

The surfactant used in the micelle forming is not particularly limited.

Examples of the surfactant include nonionic surfactants, anionic surfactants, and non-ionic surfactants.

Examples of the nonionic surfactant include polyoxyethylene alkyl ethers such as polyoxyethylene lauryl ether; polyoxyalkylene alkyl phenyl ethers such as polyoxyethylene nonyl phenyl ether; and polyoxyalkylene fatty acid esters such as polyoxyethylene monolaurate.

Examples of the anionic surfactants include fatty acid salts such as sodium oleate, and alkyl sulfates such as sodium lauryl sulfate and sodium stearyl sulfate.

Examples of the non-ionic surfactant include glycerin-based fatty acid ester type, sorbitan-based fatty acid ester type, and sorbitol-based fatty acid ester type.

From the perspective of exhibiting superior effect of the present invention, the surfactant is preferably a non-ionic surfactant, a sorbitan-based surfactant is preferred, and a sorbitan-based fatty acid ester type surfactant is more preferred.

Examples of the sorbitan-based fatty acid ester type surfactant include polyoxyethylene sorbitan trioleate (RHEODOL TW-O320V, available from Kao Corporation).

From the perspective of exhibiting superior effect of the present invention, the content of the surfactant is preferably from 1 to 10 parts by mass based on 100 parts by mass of the specific polymer.

### Diene Polymer A Having Number Average Molecular Weight from 1000 to 100000

The diene polymer A having a number average molecular weight from 1000 to 100000 used in the micelle forming is identical to the diene polymer A contained in the particle dispersion according to an embodiment of the present invention.

In the micelle forming, when the specific polymer is dispersed in the diene polymer A having a number average molecular weight from 1000 to 100000 in the presence of the surfactant, for example, mixing may be performed by adding the specific polymer in a mixture of the surfactant and the diene polymer A having a number average molecular weight from 1000 to 100000, or the specific polymer, the surfactant, and the diene polymer A having a number average molecular weight from 1000 to 100000 may be mixed simultaneously.

### Organic Solvent

In the micelle forming, an organic solvent can be further used in the specific polymer, the surfactant, and the diene polymer A having a number average molecular weight from 1000 to 100000. A case where an organic solvent is further used in the micelle forming is preferred because, while increase in the average particle diameter of the surface-modified particles (or the particles contained in the surface-modified particles) in the resulting particle dispersion is suppressed, the content of the surface-modified particles in the resulting particle dispersion can be increased.

Specific examples of the organic solvent include straight-chain or branched aliphatic hydrocarbon compounds, such as n-pentane, isopentane, neopentane, hexane (e.g., n-hexane, 2-methylpentane, 3-methylpentane, 2,2-dimethylbutane, and 2,3-dimethylbutane), n-heptane, 2-methylhexane, 3-methylhexane, 2,2-dimethylpentane, 2,3-dimethylpentane, 2,4-dimethylpentane, 3,3-dimethylpentane, 3-ethylpentane, 2,2,3-trimethylbutane, n-octane, and isooctane; alicyclic hydrocarbons, such as cyclopentane, cyclohexane, and methylcyclopentane; aromatic hydrocarbons, such as xylene, benzene, and toluene; and terpene-based organic solvents, such as α-pinene, β-pinene, and limonene.

Among these, from the perspective of capability of increasing the content of the surface-modified particles in the resulting particle dispersion while increase in the average particle diameter of the surface-modified particles (or the particles contained in the surface-modified particles) in the resulting particle dispersion is suppressed, the organic solvent preferably contains a straight-chain or branched aliphatic hydrocarbon compound, and more preferably contains hexane.

### Used Amount of Organic Solvent

The used amount of the organic solvent is preferably from 50 to 300 parts by mass based on 100 parts by mass of the diene polymer A having a number average molecular weight from 1000 to 100000.

In the micelle forming, there is no particular limitation on a method of obtaining a micelle dispersion containing micelles of the specific polymer (polymer E) by dispersing the specific polymer in the diene polymer A having a number average molecular weight from 1000 to 100000 in the presence of the surfactant. For example, using an agitator such as a high-speed dissolver type agitator, the diene polymer A having a number average molecular weight from 1000 to 100000 and containing the specific polymer and the surfactant may be mixed with the organic solvent that is optionally used in a condition at the number of rotation (rotation speed) of, for example, from 1000 to 2000 rpm. Furthermore, the specific polymer, the surfactant, the diene polymer A having a number average molecular weight from 1000 to 100000, and the organic solvent optionally used may be simultaneously mixed.

By the mixing, the specific polymer can be dispersed in a granular form in the diene polymer A having a number average molecular weight from 1000 to 100000.

The micelle dispersion obtained in the micelle forming is only required to be in a state in which the micelles of the specific polymer (polymer E) are dispersed in the diene polymer A having a number average molecular weight from 1000 to 100000.

Furthermore, the micelle of the specific polymer (polymer E) contains an isocyanate group, an amino group, or an imino group derived from the specific polymer. The isocyanate group, amino group, or imino group derived from the specific polymer may be also referred to as "isocyanate group and the like".

The position of the isocyanate group, amino group, or imino group in the micelle is not particularly limited, and it is conceived that the isocyanate group, amino group, or imino group derived from the specific polymer can be present in, for example, the surface of the micelle of the specific polymer (polymer E) by molecular motion.

### Surface-Modifying

The surface-modifying is
a process of, in a case where the polymer E in the micelle dispersion contains an isocyanate group, adding a compound F containing a hydrocarbon group having from 3 to 30 carbons, and a hydroxy group, an amino group, or an imino group, and/or a diene polymer G containing a hydroxy group, an amino group, or an imino group in the micelle dispersion, reacting the isocyanate group contained in the micelle and the compound F and/or the diene polymer G, and modifying a surface of the micelle with the hydrocarbon group and/or the diene polymer D through a urethane bond or a urea bond, or
in a case where the polymer E in the micelle dispersion contains an amino group or an imino group, adding a compound H containing a hydrocarbon group having from 3 to 30 carbons and a carboxy group or an acid anhydride group, and/or a diene polymer I containing a carboxy group or an acid anhydride group in the micelle dispersion, reacting the amino group or the imino group contained in the micelle and the compound H and/or the diene polymer I, and modifying a surface of the micelle with the hydrocarbon group and/or the diene polymer D through an amide bond.

In the surface-modifying, reaction conditions are not particularly limited; however, from the perspective of exhibiting superior effect of the present invention, reaction conditions at 20 to 60°C for 0.5 to 10 hours are preferred. The reaction is preferably performed while agitation is performed. The agitation can be performed by, for example, using an agitator such as a high-speed dissolver type agitator. The number of rotation (rotation speed) of the agitation is preferably from 1000 to 2000 rpm.

After the surface treatment, the particle dispersion according to an embodiment of the present invention can be obtained.

Note that some of the isocyanate group and the like contained in the micelles may remain as the isocyanate group and the like without being reacted.

After the surface-modifying, the produced particle dispersion may further contain, for example, a compound F, diene polymer G, compound H, or diene polymer I, which are unreacted.

The surface-modifying may include drying after the reaction, as necessary.

In the surface-modifying, after the reaction, as necessary, drying may be further performed. In a case where the organic solvent is used in the micelle forming, by performing the drying, the organic solvent can be removed from the resulting particle dispersion, the proportion of the content of the particles in the particle dispersion can be increased, and superior effect of the present invention is exhibited.

The drying method in the drying is not particularly limited. Examples thereof include distillation under reduced pressure.

### Case Where Polymer E in Micelle Dispersion Contains Isocyanate Group

The surface-modifying in a case where the polymer E in the micelle dispersion obtained in the micelle forming contains an isocyanate group is a process of modifying a surface of the micelle with a hydrocarbon group having from 3 to 30 carbons and/or the diene polymer D through a urethane bond or a urea bond, by adding a compound F containing the hydrocarbon group, and a hydroxy group, an amino group (-NH₂), or an imino group (-NH-), and/or the diene polymer G containing a hydroxy group, an amino group, or an imino group in the micelle dispersion, and reacting the isocyanate group contained in the micelle and the compound F and/or the diene polymer G. Note that the hydroxy group, amino group, or imino group contained each independently in the compound F and the diene polymer G may be referred to as "hydroxy group and the like" hereinafter.

Note that, in the surface-modifying, the micelle of the specific polymer (polymer E) becomes the particle (granular part) contained in the surface-modified particle contained in the particle dispersion according to an embodiment of the present invention, and the particle (granular part) is surface-modified with the hydrocarbon group having from 3 to 30 carbons derived from the compound F and/or the diene polymer D derived from the diene polymer G.

A urethane bond is formed by a reaction between the isocyanate group and the hydroxy group, and a urea bond is formed by reaction between the isocyanate group and the amino group or the imino group.

By forming the urethane bond or the urea bond described above, the surface of the micelle can be modified with the hydrocarbon group and/or the diene polymer D.

The surface-modifying in a case where the polymer E has an isocyanate group in the micelle dispersion obtained in the micelle forming, an example of a preferable aspect is one in which the compound F is used for the micelle dispersion.

For the compound F (compound containing the hydroxy group and the like) containing a hydrocarbon group having from 3 to 30 carbons and a hydroxy group, an amino group (-NH₂), or an imino group (-NH-R: R represents a hydrocarbon group) that can be used in the surface-modifying, the hydrocarbon group having from 3 to 30 carbons contained in the compound F is identical to the hydrocarbon group having from 3 to 30 carbons modifying the surface of the particle contained in the surface-modified particle contained in the particle dispersion according to an embodiment of the present invention. Note that, in the imino group (*-NH-R: R represents a hydrocarbon group), at * in the formula, the hydrocarbon group having from 3 to 30 carbons described above can be bonded, and the hydrocarbon group as R contained in the imino group is not particularly limited. For example, the hydrocarbon group as R contained in the imino group may be identical to that of the hydrocarbon group having from 3 to 30 carbons modifying the surface of the particle contained in the particle dispersion according to an embodiment of the present invention.

In the compound F, one hydroxy group and the like is preferably contained in one molecule.

In the compound F, the hydroxy group and the like is preferably a hydroxy group or an amino group (-NH₂), and more preferably an amino group (-NH₂).

In the compound F, the hydrocarbon group having from 3 to 30 carbons and the hydroxy group and the like can be bonded directly.

In the compound F, the hydroxy group and the like is preferably bonded to a terminal of the hydrocarbon group having from 3 to 30 carbons.

For the compound F, examples of the compound having the hydrocarbon group having from 3 to 30 carbons and the hydroxy group include saturated aliphatic hydrocarbon groups having a hydroxy group, such as hydroxypropane, hydroxybutane, hydroxypentane, hydroxyhexane, hydroxyoctane, hydroxydecane, hydroxyheptadecane, hydroxyoctadecane, and hydroxyeicosane; and
unsaturated aliphatic hydrocarbon groups having a hydroxy group, such as hydroxypropene, hydroxybutene, hydroxypentene, hydroxyheptene, hydroxyoctene, and oleyl alcohol.

For the compound F, examples of the compound having the hydrocarbon group having from 3 to 30 carbons and the amino group include saturated aliphatic hydrocarbon groups having an amino group, such as propylamine, butylamine, pentylamine, hexylamine, octylamine, decylamine, dodecylamine, tetradecylamine, hexadecylamine, heptadecylamine, octadecylamine, and eicosylamine; and
unsaturated aliphatic hydrocarbon groups having an amino group, such as aminopropene, aminobutene, aminopentene, aminoheptene, aminooctene, and oleylamine.

Furthermore, for the compound F, examples of the compound having the hydrocarbon group having from 3 to 30 carbons and the amino group include cocoamine, caprylamine, and oleylamine.

Note that the compound F containing the hydrocarbon group having from 3 to 30 carbons and the hydroxy group and the like may be a mixture of the compounds described above.

In the surface-modifying, the molar ratio of the amount of the isocyanate group contained in the specific polymer to the amount of the hydroxy group, amino group, or imino group or the total of these contained in the compound F and/or the diene polymer G (NCO/OH and the like) is preferably from 1.0 to 1.5 from the perspective of exhibiting superior effect of the present invention.

### Case Where Polymer E in Micelle Dispersion Contains Amino Group or Imino Group

The surface-modifying in a case where the polymer E in the micelle dispersion obtained in the micelle forming contains an amino group or an imino group is a process of modifying a surface of the micelle with a hydrocarbon group having from 3 to 30 carbons and/or the diene polymer D through an amide bond, by adding a compound H containing the hydrocarbon group and a carboxy group or an acid anhydride group, and/or a diene polymer I containing a carboxy group or an acid anhydride group, and reacting the amino group or the imino group contained in the micelle and the compound H and/or the diene polymer I. Note that the carboxy group or acid anhydride group each independently contained in the compound H and the diene polymer I may be referred to as "acid anhydride group and the like" hereinafter.

Note that, in the surface-modifying, the micelle of the specific polymer (polymer E) becomes the particle (granular part) contained in the surface-modified particle contained in the particle dispersion according to an embodiment of the present invention, the particle (granular part) is surface-modified with the hydrocarbon group having from 3 to 30 carbons derived from the compound H and/or the diene polymer D derived from the diene polymer I.

The amide bond can be formed by a reaction between the amino group or imino group and the carboxy group or acid anhydride group. **In** a case where the amino group or imino group and the acid anhydride group are reacted, the acid anhydride group can be an amide group formed from the amino group or imino group and can be a carboxy group.

By forming the amide bond described above, the surface of the micelle can be modified with the hydrocarbon group and/or the diene polymer D.

The surface-modifying in a case where the polymer E contains an amino group or an imino group in the micelle dispersion obtained in the micelle forming, an example of a preferable aspect is one in which the diene polymer I is used for the micelle dispersion.

The diene polymer I is a diene polymer containing a carboxy group or an acid anhydride group.

The diene polymer I may contain a carboxy group and an acid anhydride group.

The backbone of the diene polymer I is a polymer formed from a monomer containing a conjugated diene monomer as a diene monomer.

Specific examples of the backbone of the diene polymer I include polyisoprene, polybutadiene, acrylonitrile butadiene copolymers, styrene butadiene copolymers, styrene isoprene copolymers, and styrene isoprene butadiene rubber copolymers.

Among these, from the perspective of exhibiting superior effect of the present invention, polybutadiene, polyisoprene, or a styrene butadiene copolymer is preferred, polyisoprene is more preferred.

The number of the carboxy group or the acid anhydride group contained in the diene polymer I (in a case where the carboxy group and the acid anhydride group are contained, the total number of these) is preferably from 1 to 10, and more preferably from 2 to 5, in one molecule of the diene polymer I.

The position of the carboxy group or the acid anhydride group in the diene polymer I is not particularly limited.

### Number Average Molecular Weight of Diene Polymer I

The number average molecular weight of the diene polymer I is preferably from 1000 to 100000, and more preferably from 10000 to 50000, from the perspective of exhibiting superior effect of the present invention.

Note that the Mn described above are each a standard polystyrene conversion value obtained by gel permeation chromatography (GPC) measurement under the following conditions.
- Solvent: Tetrahydrofuran
- Detector: RI detector

In the surface-modifying, the molar ratio of the amount of the amino group or imino group or the total amount of these contained in the specific polymer to the amount of the carboxy group or acid anhydride group or the total amount of these contained in the compound H and/or the diene polymer I (amino group/acid anhydride group and the like) is preferably 1.0 or greater from the perspective of exhibiting superior effect of the present invention.

In the surface-modifying, in a case where the diene polymer I is used, the used amount of the diene polymer I is preferably from 10 to 30 parts by mass based on 100 parts by mass of the diene polymer A having a number average molecular weight from 1000 to 100000 and contained in the micelle dispersion obtained in the micelle forming, from the perspective of exhibiting superior effect of the present invention.

### Rubber composition

The rubber composition according to an embodiment of the present invention (hereinafter, also referred to as "composition according to an embodiment of the present invention") is a rubber composition containing a diene rubber X and the particle dispersion according to an embodiment of the present invention described above.

### Diene Rubber X

There is no particular restriction on the diene rubber X contained in the composition according to an embodiment of the present invention, and specific examples thereof include natural rubber (NR), isoprene rubber (IR), butadiene rubber (BR), acrylonitrile-butadiene rubber (NBR), styrene-butadiene rubber (SBR), styrene-isoprene rubber (SIR), styrene-isoprene-butadiene rubber (SIBR), butyl rubber (IIR), halogenated butyl rubber (Br-IIR, Cl-IIR), chloroprene rubber (CR), and a derivative of each of these rubbers.

Note that the diene rubber contained in the rubber composition according to an embodiment of the present invention may be referred to as "diene rubber X".

The diene rubber X preferably contains 30 mass% or greater of at least one type of these rubbers based on the total amount of the diene rubber X from the perspective of exhibiting superior effect of the present invention.

The weight molecular weight (Mw) of the diene rubber X is not particularly limited, but is preferably from 100000 to 10000000, more preferably from 200000 to 1500000, and even more preferably from 300000 to 3000000, from the perspective of exhibiting superior effect of the present invention.

Furthermore, the number average molecular weight (Mn) of the diene rubber X is not particularly limited, but is preferably from 50000 to 5000000, more preferably from 100000 to 750000, and even more preferably from 150000 to 1500000, from the perspective of exhibiting superior effect of the present invention. Note that, in the composition according to an embodiment of the present invention, the number average molecular weight (Mn) of the diene rubber X may be more than 100000.

The Mw and/or Mn of at least one type of diene rubber contained in the diene rubber X is preferably within the ranges described above, and the Mw and/or Mn of all types of diene rubbers contained in the diene rubber X are more preferably within the ranges described above.

Note that the Mw and Mn described above are each a standard polystyrene conversion value obtained by gel permeation chromatography (GPC) measurement under the following conditions.
- Solvent: Tetrahydrofuran
- Detector: RI detector

Note that the diene rubber X contained in the rubber composition according to an embodiment of the present invention does not contain the particle dispersion according to an embodiment of the present invention. Furthermore, the diene rubber X does not contain the diene polymer A contained in the particle dispersion according to an embodiment of the present invention.

### Particle Dispersion

As described above, the composition according to an embodiment of the present invention contains the particle dispersion according to an embodiment of the present invention described above.

The particle dispersion according to an embodiment of the present invention is as described above.

In the composition according to an embodiment of the present invention, from the perspective of exhibiting superior effect of the present invention, the content of the particle dispersion according to an embodiment of the present invention is preferably from 1 to 150 parts by mass, more preferably from 2 to 100 parts by mass, and even more preferably from 3 to 80 parts by mass, based on 100 parts by mass of the diene rubber X described above.

### Optional Component

The composition according to an embodiment of the present invention may contain a component (optional component) other than the components described above, as necessary.

Examples of such a component include various additives that are typically used in rubber compositions, such as fillers (e.g., carbon black, white fillers (preferably silica)), silane coupling agents, terpene resins (preferably aromatic-modified terpene resins), microcapsules (e.g., thermally expandable microcapsules), zinc oxide (flower of zinc), stearic acid, anti-aging agents, waxes, processing aids, oils, liquid polymers, thermosetting resins, vulcanizing agents (e.g., sulfur), and vulcanization accelerators.

### Filler

From the perspective of exhibiting superior effect of the present invention, the composition according to an embodiment of the present invention preferably contains at least one type of fillers selected from the group consisting of carbon black and white fillers, and more preferably contains both carbon black and white fillers.

### Carbon Black

The carbon black is not particularly limited, and for example, carbon blacks of various grades, such as SAF-HS, SAF, ISAF-HS, ISAF, ISAF-LS, IISAF-HS, HAF-HS, HAF, HAF-LS, FEF, GPF, and SRF, can be used.

The nitrogen adsorption specific surface area (N₂SA) of the carbon black is not particularly limited, but is preferably from 50 to 200 m²/g and more preferably from 70 to 150 m²/g, from the perspective of exhibiting superior effect of the present invention.

Note that the nitrogen adsorption specific surface area (N₂SA) is a value of the amount of nitrogen adsorbed to the surface of carbon black, measured in accordance with JIS K 6217-2:2001 "Part 2: Determination of specific surface area - Nitrogen adsorption methods - Single-point procedures".

### White Filler

The white filler is not particularly limited, and examples thereof include silica, calcium carbonate, magnesium carbonate, talc, clay, alumina, aluminum hydroxide, titanium oxide, and calcium sulfate. Among these, from the perspective of achieving superior effects of an embodiment of the present invention, the white filler is preferably silica.

The silica is not particularly limited, and examples thereof include wet silica (hydrous silicic acid), dry silica (silicic anhydride), calcium silicate, and aluminum silicate. Among these, from the perspective of achieving superior effects of an embodiment of the present invention, the silica is preferably wet silica.

The cetyltrimethylammonium bromide (CTAB) adsorption specific surface area of the silica is not particularly limited, but is preferably from 100 to 400 m²/g, more preferably from 150 to 300 m²/g, and even more preferably from 160 to 250 m²/g, from the perspective of exhibiting superior effect of the present invention.

Note that the CTAB adsorption specific surface area is a value of the amount of CTAB adsorbed to the surface of silica measured in accordance with JIS K 6217-3:2001 "Part 3: Determination of specific surface area - CTAB adsorption method".

### Content

In a case where the composition according to an embodiment of the present invention further contains fillers, the content of the fillers is preferably from 1 to 200 parts by mass, more preferably from 10 to 150 parts by mass, and even more preferably from 30 to 100 parts by mass, based on 100 parts by mass of the diene rubber X described above from the perspective of exhibiting superior effect of the present invention.

In a case where the composition according to an embodiment of the present invention further contains fillers, the total content of the particle dispersion according to an embodiment of the present invention described above and the fillers is preferably from 5 to 250 parts by mass, more preferably from 20 to 200 parts by mass, and even more preferably from 50 to 150 parts by mass, based on 100 parts by mass of the diene rubber X described above from the perspective of exhibiting superior effect of the present invention.

In a case where the composition according to an embodiment of the present invention further contains carbon black, the content of the carbon black is preferably from 1 to 100 parts by mass, and more preferably from 5 to 50 parts by mass, based on 100 parts by mass of the diene rubber X described above from the perspective of exhibiting superior effect of the present invention.

In a case where the composition according to an embodiment of the present invention further contains white fillers (especially silica), the content of the white fillers is preferably from 1 to 150 parts by mass, more preferably from 10 to 120 parts by mass, and even more preferably from 50 to 90 parts by mass, based on 100 parts by mass of the diene rubber X described above from the perspective of exhibiting superior effect of the present invention.

### Thermally Expandable Microcapsule

The composition according to an embodiment of the present invention preferably further contains thermally expandable microcapsules from the perspective of exhibiting superior effect of the present invention.

An example of a preferable aspect is one in which the thermally expandable microcapsules have a structure in which a thermally expandable substance is encapsulated in a shell material formed from a thermoplastic resin. The shell material of the thermally expandable microcapsules can be formed from, for example, a nitrile-based polymer.

The thermally expandable substance encapsulated in the shell material of the microcapsules has the property of vaporizing or expanding due to heat, and an example thereof is at least one type selected from the group consisting of hydrocarbons such as isoalkanes and normal alkanes. Examples of the isoalkanes include isobutane, isopentane, 2-methylpentane, 2-methylhexane, and 2,2,4-trimethylpentane, and examples of normal alkanes include n-butane, n-propane, n-hexane, n-heptane, and n-octane. These hydrocarbons may each be used alone, or a plurality thereof may be used in combination. As a preferred form of a thermally expandable substance, a substance in which a hydrocarbon which is a gas at room temperature is dissolved in a hydrocarbon which is a liquid at room temperature may be used. By using a mixture of such hydrocarbons, it is possible to achieve sufficient expansion power from a low temperature region to a high temperature region within the vulcanization molding temperature range (150°C to 190°C) of an unvulcanized tire.

As the thermally expandable microcapsules, for example, trade names "EXPANCEL 091DU-80" or "EXPANCEL 092DU-120", available from Expancel in Sweden, or trade names "Matsumoto Microsphere F-85D" or "Matsumoto Microsphere F-100D", available from Matsumoto Yushi-Seiyaku Co., Ltd., can be used.

From the perspective of exhibiting superior effect of the present invention, the content of the thermally expandable microcapsules is preferably from 1 to 20 parts by mass, and more preferably from 3 to 15 parts by mass, based on 100 parts by mass of the diene rubber X.

The method of producing the composition according to an embodiment of the present invention is not particularly limited, and specific examples thereof include a method whereby each of the above-mentioned components is mixed using a known method and device (e.g., Banbury mixer, kneader, and roll). When the composition according to an embodiment of the present invention further contains a sulfur or a vulcanization accelerator, the components other than the sulfur and the vulcanization accelerator are preferably blended first at a high temperature (preferably from 100 to 160°C) and then cooled before the sulfur or the vulcanization accelerator is blended.

In addition, the composition according to an embodiment of the present invention can be vulcanized or crosslinked under known vulcanizing or crosslinking conditions.

The composition according to an embodiment of the present invention can be used for, for example, a pneumatic tire.

The composition according to an embodiment of the present invention is suitably used for a studless tire.

Furthermore, the composition according to an embodiment of the present invention is suitably used in a tread portion of a pneumatic tire or a studless tire.

### Pneumatic Tire

The pneumatic tire according to an embodiment of the present invention is one that is produced using the composition according to an embodiment of the present invention described above. In particular, the pneumatic tire is preferably a pneumatic tire having a tire tread portion produced by using the composition according to an embodiment of the present invention.

FIG. 1 is a partial cross-sectional schematic view of a pneumatic tire according to an embodiment of the present invention, but the pneumatic tire according to an embodiment of the present invention is not limited to the embodiment illustrated in FIG. 1.

In FIG. 1, the reference sign 1 denotes a bead portion, the reference sign 2 denotes a sidewall portion, and the reference sign 3 denotes a tire tread portion.

In addition, a carcass layer 4, in which a fiber cord is embedded, is mounted between a left-right pair of bead portions 1, and ends of the carcass layer 4 are wound by being folded around bead cores 5 and a bead filler 6 from an inner side to an outer side of the tire.

In the tire tread portion 3, a belt layer 7 is provided along the entire circumference of the tire on the outer side of the carcass layer 4.

Additionally, a rim cushion 8 is provided in a portion of each of the bead portions 1 that is in contact with a rim.

Note that the tire tread portion 3 is preferably formed from the composition according to an embodiment of the present invention described above.

The pneumatic tire according to an embodiment of the present invention can be produced, for example, in accordance with a known method. In addition, as a gas with which the pneumatic tire is filled, an inert gas such as nitrogen, argon, helium, or the like can be used in addition to a normal air or air whose oxygen partial pressure is adjusted.

### Example

An embodiment of the present invention will be described in further detail below by way of examples. However, an embodiment of the present invention is not limited to these examples.

### Production of Particle Dispersion

As described below, the specific particle dispersions 1 to 5 and comparative particle dispersions 1 and 2 were produced.

### Example A-1: Specific Particle Dispersion 1

As described below, the specific particle dispersion 1 was produced.

### Micelle Forming

### Preparation of Specific Polymer

80.0 g of polycarbonate diol (T6001, available from Asahi Kasei Corporation; number average molecular weight: 1000) and 40.9 g of 4,4'-diphenylmethane diisocyanate (Millionate MT, available from Tosoh Corporation; number average molecular weight: 250) were reacted at 80°C for 5 hours, and thus a polycarbonate urethane prepolymer having an isocyanate terminal (polycarbonate-based urethane prepolymer having an isocyanate group at a terminal. Urethane bonding was contained) was obtained.

In the polycarbonate urethane prepolymer having an isocyanate terminal prepared as described above, 14.0 g of dimethyl thio-toluene diamine (Hartcure 30, available from Kumiai Chemical Industry Co., Ltd.; structure below; chain extender; the same applies hereinafter) was added and agitated for 2 minutes, and thus a polyurethane having two isocyanate groups at terminals (polyurethane having isocyanates at terminals) (specific polymer) was prepared. Note that the polyurethane having isocyanates at terminals has a urea bond formed by a reaction between the isocyanate group of the specific polymer and the amino group of the dimethyl thio-toluene diamine, in addition to the urethane bond described above.

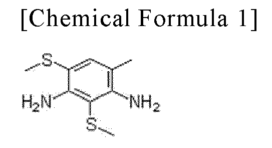

To this, in 443.7 g of liquid butadiene homopolymer (LBR-307, available from Kuraray Co., Ltd.; number average molecular weight: 8000; unmodified), 4.0 g of sorbitan acid-based surfactant (TW-O320V, available from Kao Corporation) was then added and agitated at a rotation speed of 2000 rpm for 10 minutes by a high-speed dissolver type agitator. By this, a micelle dispersion in which the micelles formed from the polyurethane having isocyanates at terminals is contained in the liquid butadiene homopolymer was obtained. The isocyanate groups of the polyurethane having isocyanates at terminals can be present in the surface of the micelles.

### Surface-Modifying

Then, in the micelle dispersion, 4.2 g of caprylamine (FARMIN 08D, available from Kao Corporation; the caprylamine was a commercially available product which was a mixture of C8 98% and C10 2%. The C8 amine, which was the main component, had the structure below) was added, and then agitated (rotation speed: 2000 rpm) for 1 hour in a condition at room temperature (23°C). By allowing the isocyanate group contained in the micelle (i.e., contained in the polyurethane having isocyanates at terminals) and the amino group contained in the caprylamine to react to form a urea bond, the n-octyl group and the like contained in the caprylamine was introduced into the polyurethane (surface of the granular part), which was the main chain of the polyurethane having isocyanates at terminals, through the urea bond.

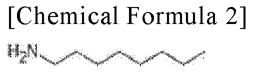

By this, a particle dispersion containing 31 parts by mass of the surface-modified particles based on 100 parts by mass of the liquid butadiene homopolymer (specific particle dispersion 1) was obtained.

In the specific particle dispersion 1, the particles surface-modified with the n-octyl group and the like and (having the granular part) formed from the polyurethane (surface-modified particles) were dispersed in the liquid butadiene homopolymer having the number average molecular weight of 8000, and the n-octyl group and the like was bonded to the polyurethane (surface of the granular part) through the urea bond.

When the specific particle dispersion 1 was measured by using a laser diffraction particle size distribution analyzer, it was confirmed that particles having the average particle diameter of the surface-modified particles of 50 µm were formed.

The specific particle dispersion 1 had fluidity in a condition at 23°C (it was a liquid). The viscosity of the specific particle dispersion 1 was 517 Pa·s in a condition at 23°C.

### Example A-2: Specific Particle Dispersion 2

A particle dispersion (specific particle dispersion 2) was obtained by the procedure identical to that of the specific particle dispersion 1 except for using 443.7 g of liquid isoprene homopolymer (LIR-30, available from Kuraray Co., Ltd.; number average molecular weight: 28000; unmodified) in place of the liquid butadiene homopolymer described above, and using 6.4 g of cocoamine (FARMIN CS, available from Kao Corporation; mixture of monoalkyl monoamines; number of carbons of the alkyl groups was from 8 to 18; the cocoamine was a commercially available product which was a mixture of C8 7%, C10 7%, C12 51%, C14 19%, C16 8%, C18 (saturated) 2%, C18 (unsaturated) 6%) in place of the caprylamine described above.

In the surface-modifying, by allowing the isocyanate group contained in the polyurethane having isocyanates at terminals and the amino group contained in the cocoamine to react to form a urea bond, the alkyl groups having the number of carbons described above contained in the cocoamine were introduced into the polyurethane (surface of the granular part) through the urea bond.

The obtained specific particle dispersion 2 was a particle dispersion containing 32 parts by mass of the surface-modified particles based on 100 parts by mass of the liquid isoprene homopolymer.

In the specific particle dispersion 2, the particles surface-modified with the hydrocarbon groups having from 8 to 18 carbons (alkyl groups and the like) and (having the granular part) formed from the polyurethane (surface-modified particles) were dispersed in the liquid isoprene homopolymer having the number average molecular weight of 28000, and the alkyl groups were bonded to the polyurethane (surface of the granular part) through the urea bond.

When the specific particle dispersion 2 was measured by using a laser diffraction particle size distribution analyzer, it was confirmed that surface-modified particles (microparticles) having the average particle diameter of 10 µm were formed.

The specific particle dispersion 2 had fluidity in a condition at 23°C (it was a liquid). The viscosity of the specific particle dispersion 2 was 832 Pa·s in a condition at 23°C.

### Example A-3: Specific Particle Dispersion 3

A particle dispersion (specific particle dispersion 3) was obtained by the procedure identical to that of the specific particle dispersion 1 except for using 443.7 g of liquid styrene-butadiene polymer (RICON184, available from TOTAL; number average molecular weight: 8600; unmodified) in place of the liquid butadiene homopolymer, and 8.7 g of oleylamine (FARMIN O-V, available from Kao Corporation; the oleylamine was a commercially available product which was a mixture of C14 1%, C16 6%, C18 (saturated) 6%, C18 (unsaturated) 87%; the C18 (unsaturated) amine which was the main component had the structure below) in place of the caprylamine.

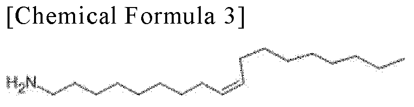

In the surface-modifying, by allowing the isocyanate group contained in the polyurethane having isocyanates at terminals and the amino group contained in the oleylamine to react to form a urea bond, the oleyl group and the like contained in the oleylamine was introduced into the polyurethane (surface of the granular part) through the urea bond.

The obtained specific particle dispersion 3 was a particle dispersion containing 32 parts by mass of the surface-modified particles based on 100 parts by mass of the liquid styrene-butadiene polymer.

In the specific particle dispersion 3, the particles surface-modified with the oleyl group and the like and (having the granular part) formed from the polyurethane (surface-modified particles) were dispersed in the liquid styrene-butadiene polymer having the number average molecular weight of 8600, and the oleyl group and the like was bonded to the polyurethane (surface of the granular part) through the urea bond.

When the specific particle dispersion 3 was measured by using a laser diffraction particle size distribution analyzer, it was confirmed that surface-modified particles having the average particle diameter of 20 µm were formed.

The specific particle dispersion 3 had fluidity in a condition at 23°C (it was a liquid). The viscosity of the specific particle dispersion 3 was 650 Pa·s in a condition at 23°C.

### Example A-4: Specific Particle Dispersion 4

A particle dispersion (specific particle dispersion 4) was obtained by the procedure identical to that of the specific particle dispersion 1 except for changing the used amount of the dimethyl thio-toluene diamine to 10.5 g, changing the used amount of the liquid butadiene homopolymer to 139.8 g, using 216.0 g of hexane as an organic solvent together with the liquid butadiene homopolymer, changing the used amount of the caprylamine to 8.4 g, and removing the volatile component (hexane) by distillation under reduced pressure after the surface-modifying.

In the surface-modifying, by allowing the isocyanate group contained in the specific polymer and the amino group contained in the caprylamine to react to form a urea bond, the n-octyl group and the like contained in the caprylamine was introduced into the polyurethane (surface of the granular part) through the urea bond.

The obtained specific particle dispersion 4 was a particle dispersion containing 100 parts by mass of the surface-modified particles based on 100 parts by mass of the liquid butadiene homopolymer.

In the specific particle dispersion 4, the particles surface-modified with the n-octyl group and the like and (having the granular part) formed from the polyurethane (surface-modified particles) were dispersed in the liquid butadiene homopolymer having the number average molecular weight of 8000, and the n-octyl group and the like was bonded to the polyurethane (surface of the granular part) through the urea bond.

When the specific particle dispersion 4 was measured by using a laser diffraction particle size distribution analyzer, it was confirmed that surface-modified particles having the average particle diameter of 20 µm were formed.

The specific particle dispersion 4 was in a paste form in a condition at 23°C. The viscosity of the specific particle dispersion 4 was 7630 Pa·s in a condition at 23°C.

### Example A-5: Specific Particle Dispersion 5

100.0 g of castor oil polyol (H-57, available from Itoh Oil Chemicals Co., Ltd.; hydroxyl value: 92.9) and 62.1 g of 4,4'-diphenylmethane diisocyanate (Millionate MT, available from Tosoh Corporation; number average molecular weight: 250) were reacted at 80°C for 5 hours, and thus a castor oil urethane prepolymer having an isocyanate terminal (castor oil-based urethane prepolymer having an isocyanate group at a terminal. Urethane bonding was contained) was obtained.

In the castor oil urethane prepolymer having an isocyanate terminal prepared as described above, 28.4 g of dimethyl thio-toluene diamine (Hartcure 30, available from Kumiai Chemical Industry Co., Ltd.; chain extender) was added and agitated for 30 seconds, and thus a polyurethane having amino groups at some terminals was prepared. Note that the polyurethane has a urea bond formed by a reaction between the isocyanate group and the amino group of the dimethyl thio-toluene diamine, in addition to the urethane bond described above.

To this, in 599.6 g of liquid isoprene homopolymer (LIR-30, available from Kuraray Co., Ltd.; number average molecular weight: 28000; unmodified), 3.0 g of sorbitan acid-based surfactant (TW-O320V, available from Kao Corporation) was then added and agitated at a rotation speed of 2000 rpm for 1 minute by a high-speed dissolver type agitator. By this, a micelle dispersion in which the micelles formed from the polyurethane is contained in the liquid isoprene homopolymer was obtained. The amino groups of the polyurethane can be present in the surface of the micelles.

### Surface-Modifying

Then, in the micelle dispersion, 80.0 g of maleic anhydride-modified polyisoprene (isoprene polymer having a maleic anhydride group in a side chain) (LIR-403, available from Kuraray Co., Ltd.; number average molecular weight: 34000, number of functional groups in one molecule: 3) (diene polymer having an acid anhydride group) was added, and then agitated (rotation speed: 2000 rpm) for 1 hour in a condition at room temperature (23°C). By allowing the amino group contained in the micelle (i.e., contained in the polyurethane) and the maleic anhydride part contained in the maleic anhydride-modified polyisoprene to react to form an amide bond, the polyisoprene part and the like contained in the maleic anhydride-modified polyisoprene was introduced into the polyurethane (surface of the granular part), which was the main chain of the polyurethane, through the amide bond.

By this, a particle dispersion containing 32 parts by mass of the surface-modified particles based on 100 parts by mass of the liquid isoprene homopolymer (specific particle dispersion 5) was obtained.

In the specific particle dispersion 5, the particles surface-modified with the polyisoprene and the like and (having the granular part) formed from the polyurethane (surface-modified particles) were dispersed in the liquid isoprene homopolymer having the number average molecular weight of 28000, and the polyisoprene and the like was bonded to the polyurethane (surface of the granular part) through the amide bond.

When the specific particle dispersion 5 was measured by using a laser diffraction particle size distribution analyzer, it was confirmed that surface-modified particles having the average particle diameter of 30 µm were formed.

The specific particle dispersion 5 was in a paste form in a condition at 23°C. The viscosity of the specific particle dispersion 5 was 1206 Pa·s in a condition at 23°C.

### Comparative Example B-1: Comparative Particle Dispersion 1

A particle dispersion (comparative particle dispersion 1) was obtained by the procedure identical to that of the particle dispersion 1 except for not adding the caprylamine.

The obtained comparative particle dispersion 1 was a particle dispersion containing 30 parts by mass of the particles based on 100 parts by mass of the liquid butadiene homopolymer.

In the comparative particle dispersion 1, the particles that were not surface-modified with the hydrocarbon group and that were formed from the polyurethane (of terminal isocyanate) were dispersed in the liquid butadiene homopolymer having the number average molecular weight of 8000.

When the average particle diameter was measured in the manner identical to that for the particle dispersion 1, the average particle diameter of the particles contained in the comparative particle dispersion 1 was 500 µm.

### Comparative Example B-2: Comparative Particle Dispersion 2

### Micelle Forming

In 80.0 g of bisphenol F epoxy resin (YDF-170, available from NIPPON STEEL Chemical & Material Co., Ltd.), 9.6 g of m-xylenediamine (meta-xylenediamine, available from Mitsubishi Chemical Corporation) was added and agitated at 60°C for 20 minutes, and thus a polymer having two epoxy groups at terminals was prepared.

To this, in 353.7 g of liquid butadiene homopolymer (LBR-307, available from Kuraray Co., Ltd.; number average molecular weight: 8000; unmodified), 4.0 g of sorbitan acid-based surfactant (TW-O320V, available from Kao Corporation) was then added and agitated at a rotation speed of 2000 rpm for 10 minutes by a high-speed dissolver type agitator. By this, a dispersion containing micelles formed from a polymer having epoxy groups at terminals was obtained.

### Surface-Modifying

Then, in the dispersion, 24.3 g of caprylamine (FARMIN 08D, available from Kao Corporation) was added, and then agitated for 1 hour at 60°C. By allowing the epoxy group contained in the surface of the micelle (i.e., contained in the polymer having the epoxy groups at terminals) and the amino group contained in the caprylamine to react to form the following bond, the n-octyl group and the like contained in the caprylamine was introduced into the polymer, which was the main chain of the epoxy resin having the epoxy groups at terminals (surface of the granular part).

### Bond Formed by Reaction between Epoxy Group and Amino Group Contained in Caprylamine

When the epoxy group contained in the surface of the micelle is reacted with the caprylamine, the following structure is obtained.

R¹-NH-CH₂-CH(OH)-*

In the formula, R¹ represents a hydrocarbon group derived from the caprylamine, and * is bonded to a polymer derived from the polymer containing the epoxy groups at terminals.

The hydrocarbon group (R¹) derived from the caprylamine is bonded to the particle (granular part) through the bond of -NH-CH₂-CH(OH)-.

By this, a particle dispersion containing 32 parts by mass of the surface-modified particles based on 100 parts by mass of the liquid butadiene homopolymer (comparative particle dispersion 2) was obtained.

In the comparative particle dispersion 2, the particles surface-modified with the n-octyl group and (having the granular part) formed from the epoxy resin (surface-modified particles) were dispersed in the liquid butadiene homopolymer having the number average molecular weight of 8000, and the n-octyl group and the like was bonded to the surface of the granular part through

-NH-CH₂-CH(OH)-.

When the comparative particle dispersion 2 was measured by using a laser diffraction particle size distribution analyzer, it was confirmed that surface-modified particles having the average particle diameter of 50 µm were formed.

As described above, in the case where the caprylamine is reacted with the polymer having epoxy groups at terminals and the hydrocarbon group derived from the caprylamine is introduced into the surface of the micelle (granular part), the hydrocarbon group derived from the caprylamine is bonded to the granular part (polymer backbone obtained by a reaction between the bisphenol F epoxy resin and the m-xylenediamine) through -NH-CH₂-CH(OH)-as described in the bond above.

As described above, because the hydrocarbon group derived from the caprylamine is bonded to the granular part through -NH-CH₂-CH(OH)-, and not through a urethane bond or a urea bond, in the comparative particle dispersion 2, the comparative particle dispersion 2 does not correspond to the particle dispersion according to an embodiment of the present invention.

### Preparation of rubber composition

The components shown in Table 1 below were blended at proportions (parts by mass) shown in the table. Specifically, components except for sulfur and an vulcanization accelerator were first kneaded for 5 minutes in a 1.7-L sealed mixer and then discharged when the temperature reached 150°C to obtain a master batch. Then, in the obtained master batch, the sulfur and the vulcanization accelerators were added in the proportions listed in the same table and kneaded by using an open roll, and thus a rubber composition was obtained.

### Evaluation

The following evaluations were performed for each of the obtained rubber compositions.

### Processability

The Mooney viscosity was measured in accordance with JIS K 6300-1:2013 using an L-type rotor (diameter: 38.1 mm, thickness: 5.5 mm) in a Mooney viscometer under the conditions of a preheating time of 1 minute, a rotor rotation time of 4 minutes, 100°C, and 2 rpm.

The results are shown in Table 1. The results are expressed as index values, Standard Example 1 being assigned an index value of 100. A smaller value indicates a lower viscosity and, thus, superior processability.

### Fuel Economy Performance

A vulcanized rubber sheet was produced by vulcanizing (for 15 minutes at 170°C) the obtained rubber composition in a mold for Lambourn abrasion (disk having a diameter of 63.5 mm and a thickness of 5 mm).

The value of tan δ (60°C) was measured for the obtained vulcanized rubber sheet with an elongation deformation distortion of 10% ± 2%, an oscillation frequency of 20 Hz, and a temperature of 60°C using a viscoelastic spectrometer (available from Toyo Seiki Seisaku-sho, Ltd.) in accordance with JIS K 6394:2007.

The results are shown in Table 1. The results are expressed as index values, Standard Example 1 being assigned an index value of 100. A smaller value indicates superior fuel economy performance.

### Tensile Properties

In accordance with JIS K 6251: 2017, a JIS No. 3 dumbbell test piece (thickness: 2 mm) was punched out from the vulcanized rubber sheet produced as described above, and the tensile strength at break (Tb) and the elongation at break (Eb) were measured under the conditions of a temperature of 23°C and a tensile speed of 500 mm/minute.

The results are shown in Table 1. The results are expressed as index values, Standard Example 1 being assigned an index value of 100. Larger index values of the tensile strength at break (Tb) and the elongation at break (Eb) indicate superior tensile properties.

### Performance on Ice

The vulcanized rubber sheet obtained as described above was bonded to a flat cylindrical column-shaped base rubber, and the coefficient of friction on ice was measured using an inside drum on-ice friction tester. The measurement temperature was -1.5°C, the load was 5.5 g/cm³, and the drum rotation speed was 25 km/hr.

The results are shown in Table 1. The results are expressed as index values with Comparative Example 1 being assigned the index value of 100. A larger the index value indicates greater frictional force on ice, indicating excellent performance on ice. Practically, the index value is preferably 107 or greater.

**[Table 1]**

| Table 1 | Standard Example 1 | Example 1 | Example 2 | Example 3 | Example 4 | Example 5 | Comparative Example 1 | Comparative Example 2 |
|---|---|---|---|---|---|---|---|---|
| SBR | 100 | 100 | 100 | 100 | 100 | 100 | 100 | 100 |
| Silica | 80 | 70 | 70 | 70 | 60 | 70 | 70 | 70 |
| Carbon black | 10 | 10 | 10 | 10 | 10 | 10 | 10 | 10 |
| Specific particle dispersion 1 | | 40 | | | | | | |
| Specific particle dispersion 2 | | | 40 | | | | | |
| Specific particle dispersion 3 | | | | 40 | | | | |
| Specific particle dispersion 4 | | | | | 40 | | | |
| Specific particle dispersion 5 | | | | | | 40 | | |
| Comparative particle dispersion 1 | | | | | | | 40 | |
| Comparative particle dispersion 2 | | | | | | | | 40 |
| Silane coupling agent | 6.4 | 5.6 | 5.6 | 5.6 | 4.8 | 5.6 | 5.6 | 5.6 |
| Zinc oxide | 3.0 | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 | 2.0 |
| Anti-aging agent | 2.0 | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 |
| Vulcanization accelerator 2 | 0.5 | 0.5 | 0.5 | 0.5 | 0.5 | 0.5 | 0.5 | 0.5 |
| Oil 1 | 30.0 | | | | 10.0 | | | |
| Workability | 100 | 87 | 94 | 90 | 92 | 90 | 104 | 98 |
| Fuel economy performance | 100 | 95 | 94 | 94 | 92 | 92 | 106 | 97 |
| Tensile strength at break | 100 | 105 | 106 | 108 | 110 | 105 | 82 | 86 |
| Elongation at break | 100 | 110 | 111 | 105 | 116 | 121 | 80 | 83 |
| Performance on ice | 100 | 110 | 109 | 107 | 110 | 115 | 91 | 93 |

The details of each of the components shown in above Table 1 are as follows.
- SBR: Styrene-butadiene rubber, Nipol 1502, available from Zeon Corporation
- Silica: Zeosil 1165MP, available from Rhodia
- Carbon black: SEAST 6, available from Tokai Carbon Co., Ltd.
- Specific particle dispersions 1 to 5: Specific particle dispersions 1 to 5 produced as described above
- Comparative particle dispersions 1 and 2: Comparative particle dispersions 1 and 2 produced as described above
- Silane coupling agent: bis(3-triethoxysilylpropyl) tetrasulfide, Si 69, available from Evonik Industries AG
- Zinc oxide: Zinc Oxide III (available from Seido Chemical Industry Co., Ltd.)
- Stearic acid: Beads Stearic Acid YR, available from NOF Corporation
- Anti-aging agent: Santoflex 6PPD, available from Flexsys
- Sulfur: Golden Flower oil treated sulfur powder, available from Tsurumi Chemical Industry Co., Ltd.
- Vulcanization accelerator 1: NOCCELER CZ-G, available from Ouchi Shinko Chemical Industrial Co., Ltd.
- Vulcanization accelerator 2: Soxinol D-G available from Sumitomo Chemical Co., Ltd.
- Oil 1: Extract No. 4S, available from Showa Shell Sekiyu K.K.

As is clear from the results shown in Table 1, the compositions of Examples 1 to 5, which contained the specific particle dispersion, exhibited superior processability, fuel economy performance, tensile properties, and performance on ice, compared to Standard Example 1, which did not contain the specific particle dispersion.

Based on the comparison between Example 1 and Example 4, Example 4 exhibited superior fuel economy performance and tensile properties compared to Example 1, which had a smaller content of the particles in the particle dispersion.

On the other hand, Comparative Example 1, which contained, in place of the specific particle dispersion, the particle dispersion having the particles that were not surface-modified with the hydrocarbon group and the like and that were formed from the polyurethane dispersed in the butadiene homopolymer, exhibited insufficient processability, fuel economy performance, tensile properties, and performance on ice compared to Standard Example 1.

Furthermore, Comparative Example 2, which contained the comparative particle dispersion 2 having the hydrocarbon group having from 3 to 30 carbons bonded to the polymer other than the diene polymer through the linking group other than the urea bond, urethane bond, or amide bond, exhibited insufficient tensile properties and performance on ice compared to Standard Example 1.

### Reference Signs List

1 Bead portion
2 Sidewall portion
3 Tire tread portion
4 Carcass layer
5 Bead core
6 Bead filler
7 Belt layer
8 Rim cushion

## Claims

1. A particle dispersion
comprising particles formed from a polymer that are dispersed in a diene polymer A having a number average molecular weight from 1000 to 100000,
the polymer forming the particles being a polymer C that is not a diene polymer, and
the particles being surface-modified with a hydrocarbon group having from 3 to 30 carbons and/or a diene polymer D, and
the hydrocarbon group having from 3 to 30 carbons or the diene polymer D being each independently bonded to the polymer C forming the particles through a urea bond, a urethane bond, or an amide bond;
wherein the number average molecular weight is a standard polystyrene conversion value obtained by gel permeation chromatography measurement using tetrahydrofuran as solvent and a RI detector.

2. The particle dispersion according to claim 1, wherein
the diene polymer A having a number average molecular weight from 1000 to 100000 contains at least one type of unmodified diene polymer selected from the group consisting of unmodified isoprene homopolymers, butadiene homopolymers, acrylonitrile-butadiene polymers, styrene-butadiene polymers, styrene-isoprene polymers, and styrene-isoprene-butadiene polymers, and
a content of the unmodified diene polymer is 50 mass% or greater based on the total amount of the diene polymer A having a number average molecular weight from 1000 to 100000;
wherein the number average molecular weight is a standard polystyrene conversion value obtained by gel permeation chromatography measurement using tetrahydrofuran as solvent and a RI detector.

3. The particle dispersion according to claim 1 or 2, wherein an average particle diameter of the particles that are surface-modified is from 0.01 to 200 µm; wherein the average particle diameter is measured by a laser diffraction particle size distribution analyzer.

4. The particle dispersion according to any one of claims 1 to 3, wherein a content of the particles that are surface-modified is from 1 to 300 parts by mass based on 100 parts by mass of the diene polymer A having a number average molecular weight from 1000 to 100000;
wherein the number average molecular weight is a standard polystyrene conversion value obtained by gel permeation chromatography measurement using tetrahydrofuran as solvent and a RI detector.

5. The particle dispersion according to any one of claims 1 to 4, wherein the hydrocarbon group is formed only from a carbon atom and a hydrogen atom.

6. The particle dispersion according to any one of claims 1 to 5, wherein the hydrocarbon group is a monovalent hydrocarbon group.

7. The particle dispersion according to any one of claims 1 to 6, wherein the hydrocarbon group is an aliphatic hydrocarbon group that may have an unsaturated bond.

8. The particle dispersion according to any one of claims 1 to 7, wherein the hydrocarbon group is an alkyl group or an alkenyl group.

9. The particle dispersion according to any one of claims 1 to 8, wherein the hydrocarbon group is bonded to the polymer C forming the particles through the urea bond or the urethane bond.

10. The particle dispersion according to any one of claims 1 to 9, wherein the diene polymer D is bonded to the polymer C forming the particles through the amide bond.

11. A method of producing a particle dispersion,
the method producing the particle dispersion according to any one of claims 1 to 10,
the method comprising:
micelle forming of obtaining a micelle dispersion containing a micelle of a polymer E, the polymer E not being a diene polymer and containing an isocyanate group, an amino group, or an imino group, by dispersing the polymer E in a diene polymer A having a number average molecular weight from 1000 to 100000 in the presence of a surfactant, and
surface-modifying by, in a case where the polymer E in the micelle dispersion contains an isocyanate group, adding a compound F containing a hydrocarbon group having from 3 to 30 carbons, and a hydroxy group, an amino group, or an imino group, and/or a diene polymer G containing a hydroxy group, an amino group, or an imino group in the micelle dispersion, reacting the isocyanate group contained in the micelle and the compound F and/or the diene polymer G, and modifying a surface of the micelle with the hydrocarbon group and/or the diene polymer D through a urethane bond or a urea bond, or
in a case where the polymer E in the micelle dispersion contains an amino group or an imino group, adding a compound H containing a hydrocarbon group having from 3 to 30 carbons and a carboxy group or an acid anhydride group, and/or a diene polymer I containing a carboxy group or an acid anhydride group in the micelle dispersion, reacting the amino group or the imino group contained in the micelle and the compound H and/or the diene polymer I, and modifying a surface of the micelle with the hydrocarbon group and/or the diene polymer D through an amide bond;
wherein the number average molecular weight is a standard polystyrene conversion value obtained by gel permeation chromatography measurement using tetrahydrofuran as solvent and a RI detector.

12. A rubber composition comprising a diene rubber X and the particle dispersion according to any one of claims 1 to 10.

13. The rubber composition according to claim 12, wherein a content of the particle dispersion is from 1 to 150 parts by mass based on 100 parts by mass of the diene rubber X.

14. The rubber composition according to claim 12 or 13, further comprising at least one type of filler selected from the group consisting of carbon black and white fillers,
a content of the filler being from 1 to 200 parts by mass based on 100 parts by mass of the diene rubber X.

15. A pneumatic tire produced by using the rubber composition according to any one of claims 12 to 14.

## Patentansprüche

1. Partikeldispersion,
mit Partikeln, die aus einem Polymer gebildet sind und in einem Dienpolymer A mit einem zahlenmittleren Molekulargewicht von 1000 bis 100000 dispergiert sind, wobei das die Partikel bildende Polymer ein Polymer C ist, das kein Dienpolymer ist, und
die Partikel an der Oberfläche mit einer Kohlenwasserstoffgruppe mit 3 bis 30 Kohlenstoffatomen und/oder einem Dienpolymer D modifiziert sind, und
wobei die Kohlenwasserstoffgruppe mit 3 bis 30 Kohlenstoffatomen oder das Dienpolymer D jeweils unabhängig voneinander über eine Harnstoffbindung, eine Urethanbindung oder eine Amidbindung an das die Partikel bildende Polymer C gebunden ist;
wobei das zahlenmittlere Molekulargewicht ein Standard-Polystyrol-Umrechnungswert ist, der durch Gelpermeationschromatographie unter Verwendung von Tetrahydrofuran als Lösungsmittel und einem RI-Detektor ermittelt wird.

2. Partikeldispersion nach Anspruch 1, wobei
das Dienpolymer A mit einem zahlenmittleren Molekulargewicht von 1000 bis 100000 mindestens eine Art von unmodifiziertem Dienpolymer enthält, ausgewählt aus der Gruppe bestehend aus unmodifizierten Isopren-Homopolymeren, Butadien-Homopolymeren, AcrylnitrilButadien-Polymeren, Styrol-Butadien-Polymeren, Styrol-Isopren-Polymeren und Styrol-Isopren-Butadien-Polymeren, und
der Gehalt an unmodifiziertem Dienpolymer 50 Massenprozent oder mehr beträgt, bezogen auf die Gesamtmenge des Dienpolymers A mit einem zahlenmittleren Molekulargewicht von 1000 bis 100000;
wobei das zahlenmittlere Molekulargewicht ein Standard-Polystyrol-Umrechnungswert ist, der durch Gelpermeationschromatographie unter Verwendung von Tetrahydrofuran als Lösungsmittel und einem RI-Detektor ermittelt wird.

3. Partikeldispersion nach Anspruch 1 oder 2, wobei der durchschnittliche Partikeldurchmesser der oberflächenmodifizierten Partikel zwischen 0,01 und 200 µm liegt; wobei der durchschnittliche Partikeldurchmesser mit einem Laserbeugungs- Partikelgrößenverteilungsanalysator gemessen wird.

4. Partikeldispersion nach einem der Ansprüche 1 bis 3, wobei der Gehalt an oberflächenmodifizierten Partikeln 1 bis 300 Massenanteile, bezogen auf 100 Massenanteile des Dienpolymers A mit einem zahlenmittleren Molekulargewicht von 1000 bis 100000, beträgt;
wobei das zahlenmittlere Molekulargewicht ein Standard-Polystyrol-Umrechnungswert ist, der durch Gelpermeationschromatographie unter Verwendung von Tetrahydrofuran als Lösungsmittel und einem RI-Detektor ermittelt wird.

5. Partikeldispersion nach einem der Ansprüche 1 bis 4, wobei die Kohlenwasserstoffgruppe nur aus einem Kohlenstoffatom und einem Wasserstoffatom gebildet ist.

6. Partikeldispersion nach einem der Ansprüche 1 bis 5, wobei die Kohlenwasserstoffgruppe eine einwertige Kohlenwasserstoffgruppe ist.

7. Partikeldispersion nach einem der Ansprüche 1 bis 6, wobei die Kohlenwasserstoffgruppe eine aliphatische Kohlenwasserstoffgruppe ist, die eine ungesättigte Bindung aufweisen kann.

8. Partikeldispersion nach einem der Ansprüche 1 bis 7, wobei die Kohlenwasserstoffgruppe eine Alkylgruppe oder eine Alkenylgruppe ist.

9. Partikeldispersion nach einem der Ansprüche 1 bis 8, wobei die Kohlenwasserstoffgruppe über die Harnstoffbindung oder die Urethanbindung an das die Partikel bildende Polymer C gebunden ist.

10. Partikeldispersion nach einem der Ansprüche 1 bis 9, wobei das Dienpolymer D über die Amidbindung an das die Partikel bildende Polymer C gebunden ist.

11. Verfahren zur Herstellung einer Partikeldispersion,
wobei das Verfahren die Partikeldispersion nach einem der Ansprüche 1 bis 10 herstellt, wobei das Verfahren umfasst:
Bilden von Mizellen durch Erhalten einer Mizellendispersion, die eine Mizelle eines Polymers E enthält, wobei das Polymer E kein Dienpolymer ist und eine Isocyanatgruppe, eine Aminogruppe oder eine Iminogruppe enthält, durch Dispergieren des Polymers E in einem Dienpolymer A mit einem zahlenmittleren Molekulargewicht von 1000 bis 100000 in Gegenwart eines Tensids, und
Oberflächenmodifizieren, indem, falls das Polymer E in der Mizellendispersion eine Isocyanatgruppe enthält, eine Verbindung F, die eine Kohlenwasserstoffgruppe mit 3 bis 30 Kohlenstoffatomen sowie eine Hydroxylgruppe, eine Aminogruppe oder eine Iminogruppe enthält, und/oder ein Dienpolymer G, das eine Hydroxylgruppe, eine Aminogruppe oder eine Iminogruppe enthält, in der Mizellendispersion hinzugefügt wird, die in der Mizelle enthaltene Isocyanatgruppe mit der Verbindung F und/oder dem Dienpolymer G zur Reaktion gebracht wird und eine Oberfläche der Mizelle mit der Kohlenwasserstoffgruppe und/oder dem Dienpolymer D über eine Urethanbindung oder eine Harnstoffbindung modifiziert wird, oder
falls das Polymer E in der Mizellendispersion eine Aminogruppe oder eine Iminogruppe enthält, Hinzufügen einer Verbindung H, die eine Kohlenwasserstoffgruppe mit 3 bis 30 Kohlenstoffatomen und eine Carboxygruppe oder eine Säureanhydridgruppe enthält, und/oder eines Dienpolymers I, das eine Carboxygruppe oder eine Säureanhydridgruppe enthält, in die Mizellendispersion, zur Reaktion bringen der in der Mizelle enthaltenen Aminogruppe oder Iminogruppe mit der Verbindung H und/oder dem Dienpolymer I und Modifizieren einer Oberfläche der Mizelle mit der Kohlenwasserstoffgruppe und/oder dem Dienpolymer D über eine Amidbindung;
wobei das zahlenmittlere Molekulargewicht ein Standard-Polystyrol-Umrechnungswert ist, der durch Gelpermeationschromatographie unter Verwendung von Tetrahydrofuran als Lösungsmittel und einem R1-Detektor ermittelt wird.

12. Kautschukzusammensetzung, mit einem Dienkautschuk X und der Partikeldispersion nach einem der Ansprüche 1 bis 10.

13. Kautschukzusammensetzung nach Anspruch 12, wobei der Gehalt an Partikeldispersion 1 bis 150 Masseteile, bezogen auf 100 Masseteile des Dienkautschuks X, beträgt.

14. Kautschukzusammensetzung nach Anspruch 12 oder 13, die ferner mindestens eine Art von Füllstoff aufweist, der ausgewählt ist aus der Gruppe bestehend aus Ruß und weißen Füllstoffen, wobei der Gehalt des Füllstoffs 1 bis 200 Masseteile, bezogen auf 100 Masseteile des Dienkautschuks X, beträgt.

15. Luftreifen, hergestellt unter Verwendung der Kautschukzusammensetzung nach einem der Ansprüche 12 bis 14.

## Revendications

1. Dispersion de particules
comprenant des particules formées à partir d'un polymère qui sont dispersées dans un polymère diénique A ayant une masse moléculaire moyenne en nombre de 1000 à 100 000,
le polymère formant les particules étant un polymère C qui n'est pas un polymère diénique, et
les particules étant modifiées sur leur surface avec un groupe hydrocarboné ayant de 3 à 30 carbones et/ou un polymère diénique D, et
le groupe hydrocarboné ayant de 3 à 30 carbones ou le polymère diénique D étant chacun indépendamment lié au polymère C formant les particules par l'intermédiaire d'une liaison urée, d'une liaison uréthane, ou d'une liaison amide ;
dans laquelle la masse moléculaire moyenne en nombre est une valeur de conversion de polystyrène standard obtenue au moyen d'une mesure par chromatographie par perméation sur gel utilisant du tétrahydrofurane comme solvant et un détecteur d'indice de réfraction.

2. Dispersion de particules selon la revendication 1, dans laquelle
le polymère diénique A ayant une masse moléculaire moyenne en nombre de 1000 à 100 000 contient au moins un type de polymère diénique non modifié sélectionné dans le groupe constitué d'homopolymères d'isoprène non modifiés, d'homopolymères de butadiène, de polymères d'acrylonitrile-butadiène, de polymères de styrène-butadiène, de polymères de styrène-isoprène, et de polymères de styrène-isoprène-butadiène, et
la teneur du polymère diénique non modifié est de 50 % en masse ou plus par rapport à la quantité totale du polymère diénique A ayant une masse moléculaire moyenne en nombre de 1000 à 100 000 ;
dans laquelle la masse moléculaire moyenne en nombre est une valeur de conversion de polystyrène standard obtenue au moyen d'une mesure par chromatographie par perméation sur gel utilisant du tétrahydrofurane comme solvant et un détecteur d'indice de réfraction.

3. Dispersion de particules selon la revendication 1 ou 2, dans laquelle le diamètre particulaire moyen des particules qui sont modifiées sur leur surface est de 0,01 à 200 µm ; dans laquelle le diamètre particulaire moyen est mesuré par un analyseur de distribution granulométrique par diffraction laser.

4. Dispersion de particules selon l'une quelconque des revendications 1 à 3, dans laquelle la teneur des particules qui sont modifiées sur leur surface est de 1 à 300 parties en masse pour 100 parties en masse du polymère diénique A ayant une masse moléculaire moyenne en nombre de 1000 à 100 000 ;
dans laquelle la masse moléculaire moyenne en nombre est une valeur de conversion de polystyrène standard obtenue au moyen d'une mesure par chromatographie par perméation sur gel utilisant du tétrahydrofurane comme solvant et un détecteur d'indice de réfraction.

5. Dispersion de particules selon l'une quelconque des revendications 1 à 4, dans laquelle le groupe hydrocarboné est formé uniquement à partir d'atome de carbone et d'atome d'hydrogène.

6. Dispersion de particules selon l'une quelconque des revendications 1 à 5, dans laquelle le groupe hydrocarboné est un groupe hydrocarboné monovalent.

7. Dispersion de particules selon l'une quelconque des revendications 1 à 6, dans laquelle le groupe hydrocarboné est un groupe hydrocarboné aliphatique qui peut avoir une liaison insaturée.

8. Dispersion de particules selon l'une quelconque des revendications 1 à 7, dans laquelle le groupe hydrocarboné est un groupe alkyle ou un groupe alcényle.

9. Dispersion de particules selon l'une quelconque des revendications 1 à 8, dans laquelle le groupe hydrocarboné est lié au polymère C formant les particules par l'intermédiaire de la liaison urée ou de la liaison uréthane.

10. Dispersion de particules selon l'une quelconque des revendications 1 à 9, dans laquelle le polymère diénique D est lié au polymère C formant les particules par l'intermédiaire de la liaison amide.

11. Procédé de production d'une dispersion de particules,
le procédé produisant la dispersion de particules selon l'une quelconque des revendications 1 à 10,
le procédé comprenant :
la formation de micelle consistant à obtenir une dispersion micellaire contenant une micelle d'un polymère E, le polymère E n'étant pas un polymère diénique et contenant un groupe isocyanate, un groupe amino, ou un groupe imino, par dispersion du polymère E dans un polymère diénique A ayant une masse moléculaire moyenne en nombre de 1000 à 100 000 en présence d'un tensioactif, et
la modification d'une surface par, dans un cas où le polymère E dans la dispersion micellaire contient un groupe isocyanate, l'ajout d'un composé F contenant un groupe hydrocarboné ayant de 3 à 30 carbones, et un groupe hydroxy, un groupe amino, ou un groupe imino, et/ou d'un polymère diénique G contenant un groupe hydroxy, un groupe amino, ou un groupe imino dans la dispersion micellaire, la réaction du groupe isocyanate contenu dans la micelle et du composé F et/ou du polymère diénique G, et la modification d'une surface de la micelle avec le groupe hydrocarboné et/ou le polymère diénique D par l'intermédiaire d'une liaison uréthane ou d'une liaison urée, ou
dans un cas où le polymère E dans la dispersion micellaire contient un groupe amino ou un groupe imino, l'ajout d'un composé H contenant un groupe hydrocarboné ayant de 3 à 30 carbones et un groupe carboxy ou un groupe anhydride d'acide, et/ou d'un polymère diénique I contenant un groupe carboxy ou un groupe anhydride d'acide dans la dispersion micellaire, la réaction du groupe amino ou du groupe imino contenu dans la micelle et du composé H et/ou du polymère diénique I, et la modification d'une surface de la micelle avec le groupe hydrocarboné et/ou le polymère diénique D par l'intermédiaire d'une liaison amide ;
dans laquelle la masse moléculaire moyenne en nombre est une valeur de conversion de polystyrène standard obtenue au moyen d'une mesure par chromatographie par perméation sur gel utilisant du tétrahydrofurane comme solvant et un détecteur d'indice de réfraction.

12. Composition de caoutchouc comprenant un caoutchouc diénique X et la dispersion de particules selon l'une quelconque des revendications 1 à 10.

13. Composition de caoutchouc selon la revendication 12, dans laquelle la teneur de la dispersion de particules est de 1 à 150 parties en masse pour 100 parties en masse du caoutchouc diénique X.

14. Composition de caoutchouc selon la revendication 12 ou 13, comprenant en outre au moins un type de charge sélectionné dans le groupe constitué par le noir de carbone et les charges blanches,
la teneur de la charge étant de 1 à 200 parties en masse pour 100 parties en masse du caoutchouc diénique X.

15. Pneumatique produit au moyen de la composition de caoutchouc selon l'une quelconque des revendications 12 à 14.
